(19) **Europäisches Patentamt**

**European Patent Office**

**Office européen des brevets**

(11) **EP 1 277 079 B1**

(12) **EUROPÄISCHE PATENTSCHRIFT**

(45) Veröffentlichungstag und Bekanntmachung des Hinweises auf die Patenterteilung:
**29.03.2006 Patentblatt 2006/13**

(51) Int Cl.:
***G02C 7/02*** *(2006.01)*

(21) Anmeldenummer: **01942971.1**

(86) Internationale Anmeldenummer:
**PCT/DE2001/001579**

(22) Anmeldetag: **25.04.2001**

(87) Internationale Veröffentlichungsnummer:
**WO 2001/081979 (01.11.2001 Gazette 2001/44)**

(54) **VERFAHREN ZUM BERECHNEN EINES PROGRESSIVEN BRILLENGLASES SOWIE VERAHREN ZUR HERSTELLUNG EINES DERARTIGEN BRILLENGLASES**

METHOD FOR CALCULATING A PROGRESSIVE SPECTACLE LENS AND METHOD FOR PRODUCING A SPECTACLE LENS OF THIS TYPE

PROCEDE PERMETTANT DE CALCULER DES VALEURS RELATIVES A UN VERRE DE LUNETTES PROGRESSIF, ET PROCEDE DE REALISATION DUDIT VERRE DE LUNETTES PROGRESSIF

(84) Benannte Vertragsstaaten:
**AT BE CH CY DE DK ES FI FR GB GR IE IT LI LU MC NL PT SE TR**

(30) Priorität: **25.04.2000 DE 10020244**
**28.04.2000 DE 10021047**
**17.01.2001 WOPCT/DE10/00188**

(43) Veröffentlichungstag der Anmeldung:
**22.01.2003 Patentblatt 2003/04**

(73) Patentinhaber: **Rodenstock GmbH**
**80469 München (DE)**

(72) Erfinder:
• **HAIMERL, Walter**
**80337 München (DE)**
• **PFEIFFER, Herbert**
**81247 München (DE)**
• **ESSER, Gregor**
**81735 München (DE)**
• **ALTHEIMER, Helmut**
**87650 Lauchdorf (DE)**

(74) Vertreter: **Müller-Boré & Partner**
**Patentanwälte**
**Grafinger Strasse 2**
**81671 München (DE)**

(56) Entgegenhaltungen:
**US-A- 5 784 144          US-A- 5 992 998**

**Beschreibung**

**Technisches Gebiet**

Die Erfindung bezieht sich auf ein Verfahren zum Berechnen eines progressiven Brillenglases sowie auf ein Verfahren zur Herstellung eines derartigen Brillenglases, von Absenkformen, von Gießformen für das Gießen oder von Stempeln für das Pressen von derartigen Brillengläsern aus einem Kunststoffmaterial.

Unter progressiven Brillengläsern (auch als Gleitsichtgläser, Multifokalgläser etc. bezeichnet) versteht man üblicherweise Brillengläser, die in dem Bereich, durch den der Brillenträger einen in größerer Entfernung befindlichen Gegenstand betrachtet - i.f. als Fernteil bezeichnet -, eine andere (geringere) Brechkraft haben als in dem Bereich (Nahteil), durch den der Brillenträger einen nahen Gegenstand betrachtet. Zwischen dem Fernteil und dem Nahteil ist die sog. Progressionszone angeordnet, in der die Wirkung des Brillenglases von der des Fernteils kontinuierlich auf die des Nahteils ansteigt. Den Wert des Wirkungsanstiegs bezeichnet man auch als Addition.

In der Regel ist der Fernteil im oberen Teil des Brillenglases angeordnet und für das Blicken "ins Unendliche" ausgelegt, während der Nahteil im unteren Bereich angeordnet ist, und insbesondere zum Lesen ausgelegt ist. Für Spezialanwendungen - genannt werden sollen hier exemplarisch Pilotenbrillen oder Brillen für Bildschirmarbeitsplätze - können der Fern- und der Nahteil auch anders angeordnet sein und/oder für andere Entfernungen ausgelegt sein. Ferner ist es möglich, daß mehrere Nahteile und/ oder Fernteile und entsprechend Progressionszonen vorhanden sind.

Bei progressiven Brillengläsern mit konstantem Brechungsindex ist es für die Zunahme der Brechkraft zwischen dem Fernteil und dem Nahteil erforderlich, daß sich die Krümmung einer oder beider Flächen vom Fernteil zum Nahteil kontinuierlich ändert.

Die Flächen von Brillengläsern werden üblicherweise durch die sogenannten Hauptkrümmungsradien R1 und R2 in jedem Punkt der Fläche charakterisiert. (Manchmal werden anstelle der Hauptkrümmungsradien auch die sogenannten Hauptkrümmungen K1 = 1/R1 und K2 = 1/R2 angegeben. Die Hauptkrümmungsradien bestimmen zusammen mit dem Brechungsindex n des Glasmaterials die für die augenoptische Charakterisierung einer Fläche häufig verwendeten Größen:

$$\text{Flächenbrechwert} \qquad D = 0,5 * (n-1) * (1/R1 + 1/R2)$$

$$\text{Flächenastigmatismus} \ A = \qquad (n-1) * (1/R1 - 1/R2)$$

Der Flächenbrechwert D ist die Größe, über die die Zunahme der Wirkung vom Fernteil zum Nahteil erreicht wird. Der Flächenastigmatismus A (anschaulich Zylinderwirkung) ist eine "störende Eigenschaft", da ein Astigmatismus - sofern das Auge nicht selbst einen zu korrigierenden Astigmatismus aufweist -, der einen Wert von ca. 0,5 dpt übersteigt, zu einem als unscharf wahrgenommenen Bild auf der Netzhaut führt.

**Stand der Technik**

Die zur Erzielung der Flächenbrechwert-Zuwachses erforderliche Änderung der Krümmung der Fläche ohne das Sehen "störenden" Flächenastigmatismus ist zwar relativ einfach längs einer (ebenen oder gewundenen) Linie zu erreichen, seitlich dieser Linie ergeben sich jedoch starke "Verschneidungen" der Fläche, die zu einem großen Flächenastigmatismus führen, der das Glas in den Bereichen seitlich der genannten Linie mehr oder weniger schlecht macht. Bei einer ebenen, als Nabellinie ausgebildeten Linie steigt nach dem Satz von Minkwitz der Flächenastigmatismus in der Richtung senkrecht zur Nabellinie mit dem doppelten Wert des Gradienten der Flächenbrechkraft längs der Nabellinie an, so daß sich insbesondere in der Progressionszone bereits nahe der Nabellinie störende Werte des Flächenastigmatismus ergeben. (Eine Linie, die in jedem Punkt gleiche Hauptkrümmungen aufweist, die also Flächenastigmatismus-frei ist, bezeichnet man als Nabellinie oder ombilische bzw. umbilische Linie).

Deshalb ist in der Vergangenheit bei der Konstruktion einer zur Brechkraftänderung beitragenden Fläche eines progressiven Brillenglases von einer in einer Ebene liegenden oder gewunden verlaufenden Linie - auch als Hauptmeridian oder als Hauptlinie bezeichnet - ausgegangen worden, die zentral auf der Fläche von oben nach unten verläuft, und deren Verlauf in etwa der Hauptblicklinie folgt. Unter Hauptblicklinie versteht man die Folge der Durchstoßpunkte der auf zentral vor der Nase in unterschiedlichen Entfernungen gelegene Objekte gerichteten Sehstrahlen durch die Brillenglasfläche bei einer Blickbewegung und insbesondere -senkung. Die Hauptkrümmungen eines jeden Punktes dieser Linie sind derart gewählt worden, daß die gewünschte Zunahme des Flächenbrechwertes vom Fernteil zum Nahteil erreicht wird. Ausgehend von dieser Linie sind dann die Seitenbereiche der Fläche (mehr oder weniger) geeignet mit den unterschiedlichsten Verfahren bzw. Ansätzen berechnet worden.

Im Falle einer ebenen Hauptlinie (i.e. Hauptmeridian) wird das Brillenglas beim Einbau in eine Brillenfassung üblicherweise um ca. 8° bis 10° geschwenkt, so daß der Hauptmeridian entsprechend der Konvergenz der Augen schräg von oben nach unten verläuft. Progressive Brillengläser mit ebenem Hauptmeridian sind beispielsweise in der US-PS 2 878 721 oder der DE-AS 20 44 639 beschrieben.

Auf diese Druckschriften - wie auch auf alle im folgenden genannten Druckschriften - wird im übrigen zur Erläuterung aller hier nicht näher beschriebenen Begriffe ausdrücklich Bezug genommen.

Da der Verlauf der Hauptblicklinie auf einer Brillenglas-Fläche keine gerade bzw. ebene Linie ist, stellt die Verwendung eines ebenen Hauptmeridians immer einen Kompromiß dar. Deshalb ist es bereits seit langem vorgeschlagen worden, als "Konstruktionsrückgrat" für eine progressive Fläche eine gewundene Linie - auch als Hauptlinie bezeichnet - zu verwenden, deren Verlauf möglichst gut dem tatsächlichen, durch die Physiologie und nicht den Aufbau des Brillenglases (!) vorgegebenen Verlauf der Hauptblicklinie folgt.

Progressive Brillengläser mit einer gewundenen Hauptlinie sind in vielen Patentveröffentlichungen beschrieben.

Nur exemplarisch soll auf die US-PS 4 606 622 verwiesen werden. In dieser Druckschrift sind jedoch keine Angaben darüber zu finden, wie der Verlauf der Hauptlinie mit der Hauptblicklinie "in Deckung" gebracht wird.

Zwar beschäftigen sich verschiedene andere Druckschriften mit dem Verlauf der Hauptlinie, die dort gemachten Ansätze sind jedoch - wie im folgenden dargelegt werden wird - unzureichend:

Bei den in der DE-C-42 38 067 und der DE-C-43 42 234 beschriebenen Flächen wird der Verlauf der Hauptlinie durch Geradenstücke zusammengesetzt; dabei variieren die Winkel der Geraden in Abhängigkeit von der Addition. Die Hauptlinie durch Geradenstücke zusammenzusetzen ist ein ungeeigneter Ansatz, da die Hauptlinie zweimal differenzierbar sein muß. Die Hauptlinie nur in Abhängigkeit von der Addition zu variieren, um sie mit der Hauptblicklinie zur Deckung zu bringen, ist ebenfalls unzureichend, da die Hauptblicklinie von vielen weiteren Größen abhängt. Weiterhin wird in diesem Druckschriften kein Verfahren angegeben, wie man nun um diese Hauptlinie eine progressive Fläche konstruiert, die entlang der Hauptlinie vorgegebene Eigenschaften aufweist.

In der Europäischen Patentanmeldung 88 307 917 wird beschrieben, daß der Verlauf der Hauptlinie in Abhängigkeit von der - und nur der - Addition variiert werden soll. Ansonsten wird Verlauf der Hauptlinie vorgegeben, wohl in der Hoffnung, daß er mit der Hauptblicklinie übereinstimmt.

In der DE-A-196 12 284, in der die in dieser Anmeldung gemachte Unterscheidung zwischen Hauptlinie (Konstruktionslinie wenigstens einer Fläche des Brillenglases) und Hauptblicklinie (physiologische Eigenschaft) nicht gemacht wird, und stattdessen nur von einer Hauptblicklinie (letztlich als Eigenschaft des Brillenglases) gesprochen wird, ist ein Brillenglas beschrieben, dessen Hauptlinie - genauer gesagt der Versatz der Hauptlinie - in Abhängigkeit von der Fernteilwirkung (stärkerer Hauptschnitt) und der Addition variiert. Ob eine derartige Hauptlinie mit der tatsächlichen Hauptblicklinie übereinstimmt, wird nicht näher untersucht. Auch ist kein Verfahren zur Bestimmung der Hauptblicklinie angegeben. Ebenso wird nicht berücksichtigt, daß die Hauptblicklinie von vielen weiteren Parametern abhängt und bei einer alleinigen Variation der Hauptlinie nur von der Addition und der Fernteilwirkung diese nicht mit der tatsächlichen Hauptblicklinie übereinstimmen kann.

In der Patentanmeldung PCT/DE95/00438 wird eine Hauptlinie beschrieben, deren Verlauf die Form

$$x_0(y) = b + a - \frac{a}{1 + e^{c(y+d)}}$$

hat. Wie man diese Hauptlinie der Hauptblicklinie anpaßt wird nicht näher beschrieben.

Erfindungsgemäß ist erkannt worden, daß diese Form in vielen Fällen, z.B. bei astigmatischer Verordnung mit schräger Achslage, nicht ausreicht, um die Hauptlinie mit der Hauptblicklinie in Übereinstimmung zu bringen.

In der DE-A-43 37 369 wird ein Verfahren zur Berechnung eines Streifens zweiter Ordnung beschrieben. Ein Verfahren zur Berechnung eines Streifens zweiter Ordnung, der mit der Hauptblicklinie übereinstimmt, wird nicht angegeben.

## Darstellung der Erfindung

Der Erfindung liegt die Aufgabe zugrunde, ein Verfahren zum Berechnen eines progressiven Brillenglases anzugeben, bei dem entlang einer Linie - im folgenden Hauptlinie genannt - bestimmte Eigenschaften vom Brechwert und Astigmatismus vorliegen, und diese Linie mit der Hauptblicklinie übereinstimmt. Ferner soll ein entsprechendes Herstellverfahren angegeben werden.

Eine erfindungsgemäße Lösung dieser Aufgabe ist im Patentanspruch 1 angegebenen. Weiterbildungen der Erfindung sind Gegenstand der Ansprüche 2 bis 18. In den Ansprüchen 19 und 20 sind Verfahren zur Herstellung entsprechender Flächen bzw. Brillengläser angegeben.

Der Erfindung liegt der Grundgedanke zugrunde, von der in der Vergangenheit üblichen Vorgabe einer Hauptlinie - gegebenenfalls in Abhängigkeit von bestimmten Parametern -als bei der Optimierung der Fläche unveränderliches Konstruktionsrückgrad der progressiven Fläche abzugehen, und stattdessen umgekehrt vorzugehen, d. h. zuerst die Hauptblicklinie auf einer in erster Näherung berechneten Fläche zu bestimmen und dann den Verlauf der Hauptlinie und damit die Fläche dem tatsächlichen Verlauf der Hauptblicklinie anzupassen. Nur aufgrund dieser erfindungsgemäßen Vorgehensweise ist es möglich, diese beiden Linien zur Übereinstimmung zu bringen.

Das erfindungsgemäße Verfahren zeichnet sich insbesondere durch folgende Schritte aus:

a. als Anfangswerte werden ein Verlauf der Projektion $x_0(y)$ der Hauptlinie in die x,y-Ebene sowie Eigenschaften des Brillenglases längs der Hauptlinie unter Berücksichtigung der sphärischen, zylindrischen sowie gegebenenfalls prismatischen Verordnungwerte und der Addition sowie der Pupillendistanz vorgegeben und mit diesen Vorgaben zumindest ein Streifen zweiter Ordnung der progressive Fläche eines Brillenglases berechnet,

b. es wird eine Objektabstandsfunktion Al(y) vorgegeben, die die Änderung der Objektentfernung bei einer Blickbewegung und insbesondere einer Blicksenkung beschreibt,

c. in jedem Horizontalschnitt des progressiven Brillenglases wird der Durchstoßpunkt des Hauptstrahls durch die progressive Fläche bestimmt, für den der Abstand des Schnittpunkts dieses Hauptstrahles mit einer Ebene, die die Pupillendistanz halbiert, gleich dem durch die Objektabstandsfunktion Al(y) gegebenen Objektabstand ist,

d. für die Gesamtheit dieser in der Hauptblicklinie liegenden Durchstoßpunkte wird der Verlauf der Projektion $x'_0(y)$ in die x,y-Ebene berechnet,

e. der Verlauf $x'_0(y)$ wird gleich $x_0(y)$ gesetzt und die Übereinstimmung geprüft,

f. anschließend werden die Schritte a. bis e. solange iterativ wiederholt, bis die Projektion $x'_0(y)$ der Hauptblicklinie (innerhalb vorgebbarer Grenzen) gleich dem Verlauf der für die Berechnung der entsprechenden Fläche verwendeten Projektion $x_0(y)$ der Hauptlinie ist,

wobei ein Streifen zweiter Ordnung ein Bereich der progressiven Fläche längs der Hauptlinie ist, welcher durch die Beziehung

$$z\,(x,y) = x_0(y) + z_0(y) + \sum_{i=1}^{n} a_i(y) \cdot (x - x_0(y))^i$$

beschrieben ist und in dem der Koeffizientenverlauf $a_1(y)$ und $a_2(y)$ in eindeutiger Weise durch die Anfangswerte bestimmt ist.

Die Hauptlinie als gewundene Linie ist eindeutig definiert durch zwei Projektionen, beispielsweise die Projektion $x_0(y)$ in die x,y-Ebene und die Projektion $z_0(y)$ in die y,z-Ebene.

Zur Berechnung eines auf einer Hauptlinie, deren Verlauf zumindest innerhalb vorgebbarer Grenzen mit der Hauptblicklinie übereinstimmt, basierenden Brillenglases bzw. der entsprechenden progressiven Fläche gibt man sich zunächst einen beispielsweise auf Erfahrungswerten basierenden Verlauf der Projektion $x_0(y)$ der Hauptlinie vor und konstruiert dann mit dieser Projektion und den anderen Vorgaben von Eigenschaften längs der Hauptlinie ein Brillenglas zumindest als Streifen zweiter Ordnung.

Als nächstes berechnet man die Durchstoßpunkte der Hauptstrahlen durch das progressive Brillenglas, also der Strahlen, die durch den Augendrehpunkt verlaufen. In jedem Horizontalschnitt wählt man nun den Durchstoßpunkt durch die progressive Fläche aus, bei dem der Abstand vom Durchstoßpunkt durch die Vorderfläche bis zum Schnittpunkt des Hauptstrahles mit der Mittelebene, also der senkrechten Ebene die die Pupillendistanz halbiert, dem vorgegebenen Objektabstand A1(y) entspricht. Die Objektabstandsfunktion A1(y) kann beispielsweise empirisch ermittelt oder meßtechnisch für einen bestimmten Brillenträger erfaßt werden.

Die so ermittelten Durchstoßpunkte durch die progressive Fläche bilden die Hauptblicklinie. Nunmehr setzt man die Projektion $x_0(y)$ der Hauptlinie gleich der Hauptblicklinie, konstruiert also das Brillenglas ein zweites Mal und berechnet wiederum die Hauptblicklinie. Dies wiederholt man bis Hauptlinie und Hauptblicklinie übereinstimmen. In der Regel reicht dafür bereits ein Iterationssschritt aus.

Die bei der Berechnung des Brillenglases vorgegebenen Eigenschaften können beispielsweise Flächeneigenschaften und insbesondere der Flächenastigmatismus $A_0(y)$ und die mittlere Flächenbrechkraft $D_0(y)$ auf der Hauptlinie sein, wobei als Anfangsbedingungen die Pfeilhöhe z und die Ableitungen $\delta z/\delta x$ und $\delta z/\delta y$ in einem Punkt auf Hauptlinie vorgegeben werden.

Solch ein progressives Brillenglas kann man mit einer gewundenen Hauptlinie und jeden Horizontalschnitt z.B. mit einer Potenzreihe beschreiben.

Jeden Horizontalschnitt kann man dann mit

$$z(x, y_c) = x_0(y_c) + z_0(y_c) + \sum_{i=1}^{n} a_i \cdot (x - x_0(y_c))^i$$

oder die ganze Fläche mit

$$z(x, y) = x_0(y) + z_0(y) + \sum_{i=1}^{n} a_i(y) \cdot (x - x_0(y))^i$$

beschreiben.

Durch die Vorgaben der Projektion der Hauptlinie und eines bestimmten Flächenastigmatismus und einer bestimmten mittleren Flächenbrechwerts entlang der Hauptlinie sowie der Anfangsbedingungen - Pfeilhöhe z und die beiden Ableitungen

$$\frac{\partial z}{\partial x} \quad \text{und} \quad \frac{\partial z}{\partial y}$$

an einer bestimmten Stelle, ist ein sogenannter Streifen 2. Ordnung eindeutig bestimmt. Es ergeben sich also genau eine Projektion $z_0(y)$ und
jeweils ein Koeffizientenverlauf $a_1(y)$ und $a_2(y)$.

Berechnen lassen sich diese Größen entweder durch Lösen des Differentialgleichungssystem oder mit Hilfe einer Zielfunktion. Die Koeffizienten höherer Ordnung $a_3(y)$ bis $a_n(y)$ (daher auch der Begriff "Streifen zweiter Ordnung") sind frei wählbar und können zur Optimierung der Peripherie des Brillenglases benutzt werden. Selbstverständlich ist aber auch jede andere Flächendarstellung möglich, die (mindestens) zweimal differenzierbar ist.

Der vorgegebene Flächenastigmatismus $A_0(y)$ ist dabei bestimmt durch seinen Betrag und seine Achslage. Die Abweichung vom vorgegebenen Astigmatismus $A_0(y)$ berechnet man dabei beispielsweise mit der Kreuzzylindermethode, die sowohl den Betrag als auch die Achslage berücksichtigt.

Kreuzzylindermethode:

$$zyl_x = zyl_{ist} \cdot \cos(2 \cdot A_{ist}) - zyl_{soll} \cdot \cos(2 \cdot A_{soll})$$

$$zyl_y = zyl_{ist} \cdot \sin(2 \cdot A_{ist}) - zyl_{soll} \cdot \sin(2 \cdot A_{soll})$$

$$zyl_{res} = \sqrt{zyl_x^2 + zyl_y^2}$$

$$A_{res} = a\tan(\frac{zyl_y}{zyl_x})$$

mit :

$zyl_{ist}$, $A_{ist}$     Ist-Zylinder (Brillenglas): Betrag und Achslage

$zyl_{soll}$, $A_{soll}$     Soll-Zylinder (Verordnung): Betrag und Achslage

$zyl_{res}$, $A_{res}$     Resultierender-Zylinder (Astigmatischer Fehler) : Betrag und Achslage

Wenn beispielsweise die Verordnung lautet:

Zylinder: 2,5 dpt, Achse: 0 Grad nach TABO,

und das berechnete Brillenglas an einem Punkt auf der Hauptlinie eine Zylinderwirkung von 2,5 dpt und eine Achslage von 2 Grad hat, so erhält man als astigmatischen Fehler 0,174 dpt.

Erfindungsgemäß ist es allerdings bevorzugt, wenn nicht Flächeneigenschaften, sondern Eigenschaften des Brillenglases Eigenschaften in Gebrauchsstellung vorgegeben werden. Diese Eigenschaften können insbesondere der Astigmatismus und die Brechkraft der Kombination "Brillenglas/Auge" sein.

Zur Berechnung einer progressiven Fläche in der Gebrauchsstellung wird eine Gebrauchssituation festgelegt. Diese bezieht sich entweder auf einen konkreten Nutzer, für den die einzelnen Parameter in der jeweiligen Gebrauchssituation eigens ermittelt und die progressive Fläche gesondert berechnet wird, oder auf Durchschnittswerte, wie sie beispielsweise in der DIN 58 208 Teil 2 beschrieben sind.

Als Anfangsbedingung gibt man sich statt der Pfeilhöhe z die Dicke des Brillenglases und anstelle der beiden Ableitungen die prismatische Wirkung an einer bestimmten Stelle vor. Zusätzlich benötigt man noch die Flächenbeschreibung der zweiten Fläche, die insbesondere eine sphärische oder asphärische Fläche sein kann, und die Brechzahl des Brillenglases, die Pupillendistanz und den Augendrehpunktsabstand, die Vorneigung und Seitenneigung des Brillenglases und die Objektentfernungsfunktion A1(y).

Diese Werte können normierte bzw. Durchschnittswerte einer Gebrauchsstellung sein oder besser individuell ermittelte Daten des künftigen Brillenträgers. Dabei kann auch die tatsächliche Brillenfassung und deren Anordnung vor dem Auge des künftigen Brillenträgers bei der Bestimmung der Daten berücksichtigt werden.

Ziel des ersten Teils der Berechnung ist, daß die Projektion $x_0(y)$ der Hauptlinie in die x,y-Ebene mit der Projektion der Hauptblicklinie in die x,y-Ebene übereinstimmt. Allein hierdurch wird nämlich erreicht, daß der Brillenträger entlang der Hauptblicklinie, bei der die Hauptsehaufgaben auftreten, die vorbestimmten (und damit optimalen) Eigenschaften erreicht.

Da die Hauptblicklinie aber auch von der prismatischen Wirkung in jedem Horizontalschnitt abhängt, kann - wie bereits ausgeführt - die Übereinstimmung nur iterativ erzielt werden.

Nach Lösung der Iterationsaufgabe erhält man ein Brillenglas, bei dem entlang der Hauptblicklinie die Abbildungseigenschaften exakt den vorgegebenen Werten entspricht. Dabei werden bei der Bestimmung der Hauptblicklinie alle individuellen Parameter wie Pupillendistanz, Augendrehpunktsabstand, sphärische, zylindrische und prismatische Verordnungswerte, Addition, Objektabstand, Vor- und Seitenneigung der Brille, Dicke, Brechzahl und Grundkurve des Brillenglases berücksichtigt.

Die Funktionen, die den Verlauf der Projektion und der vorgegebenen Eigenschaften, wie des Flächenastigmatismus bzw. (Rest)-Astigmatismus des Systems Auge/ Brillenglas sowie der Flächenbrechkraft bzw. der Wirkung beschreiben, müssen (mindestens) zweimal stetig differenzierbar und flexibel genug sein, um die vorgegebenen Eigenschaften wiederzugeben.

Geeignete Funktionen für die Projektion $x_0(y)$ der Hauptlinie sowie die vorgegebenen Eigenschaften sind beispielsweise kubische oder höhergradige Splinefunktionen oder eine Funktion f(y) der Form

$$f(y) = b + a - \frac{a}{(1 + e^{c(y+d)})^m} + \sum_i g_i y^i$$

Ferner ist es nicht nur möglich, ausgehend von dem Streifen zweiter Ordnung, für den die Hauptlinie mit der Hauptblicklinie (zumindest innerhalb der vorgegebenen Grenzen) übereinstimmt, und auf dem die vorgegebenen Eigenschaften erreicht werden, die einzelnen Horizontalschnitte ($y = y_c$) über die folgende Funktion

$$z(x, y_c) = x_0(y_c) + z_0(y_c) + \sum_{i=1}^{n} a_i \cdot (x - x_0(y_c))^i$$

zu berechnen, sondern auch - wiederum ausgehend von dem Streifen zweiter Ordnung, in dem die Hauptlinie mit der Hauptblicklinie (zumindest innerhalb der vorgegebenen Grenzen) übereinstimmt - die gesamte Fläche mittels kubischer oder höherer Splinefunktionen und üblicher Optimierungsverfahren zu berechnen.

Das erfindungsgemäße Verfahren kann bei beliebigen Flächen eingesetzt werden, wie beispielsweise bei Brillengläsern, bei denen die progressive Fläche die Vorderfläche ist, und die in einer bestimmten Abstufung (Basiskurvensystem) als Blanks gefertigt werden.

Besonders bevorzugt wird das erfindungsgemäße Verfahren jedoch bei Brillengläsern eingesetzt, bei denen die progressive Fläche die augenseitige Fläche ist und individuell für einen bestimmten Brillenträger berechnet wird. Die Vorderfläche kann dabei eine sphärische oder asphärische Fläche und insbesondere eine torische bzw. atorische Fläche sein, wobei die von der torischen bzw. atorischen Fläche aufgebrachte Zylinderwirkung nicht notwendigerweise zur Kompensation eines Astigmatismus des jeweiligen Auges dienen muß. Die Torizität kann auch aus kosmetischen Gründen gewählt werden, wie dies in einer älteren Anmeldung beschrieben ist.

Die erfindungsgemäß berechnete progressive Fläche kann dabei in an sich bekannter Weise dazu dienen, ein progressives Brillenglas mittels jedes flächenformenden bzw. flächenbearbeitenden Verfahrens herzustellen.

Beispielsweise können die Flächendaten direkt zur Steuerung einer Schleifmaschine und gegebenenfalls auch zur Steuerung des Poliervorgangs eines Brillenglas-Rohlings aus beliebigem Silikatglas oder einem Kunststoffmaterial (mit allen Brechungsindices) eingesetzt werden. Entsprechende numerisch gesteuerte Schleif-und Poliermaschinen sind allgemein bekannt.

Selbstverständlich können die Flächendaten auch zur Herstellung von Gießformen für das Gießen, von Absenkformen oder von Stempeln für das Pressen von Brillengläsern aus einem Kunststoffmaterial verwendet werden.

Dabei ist es in bekannter Weise möglich, auf die ermittelten Flächendaten "Vorhalte-Daten", die Fehler beim Fertigungsprozeß berücksichtigten, aufzuaddieren. Auch können die Fehler der zweiten, vorgefertigten Fläche, die insbesondere meßtechnisch ermittelt worden sind, bei der Berechnung der progressiven Fläche berücksichtigt werden.

Entsprechend gilt, daß die Daten für die zweite Fläche und die Anordnung der beiden Flächen relativ zueinander für die Herstellung des Brillenglases durch Bearbeitung der zweiten Fläche bzw. die Anordnung der zweiten Gießform relativ zur Gießform für die progressive Fläche verwendet werden können.

## Kurze Beschreibung der Zeichnung

Die Erfindung wird nachstehend ohne Beschränkung des allgemeinen Erfindungsgedankens anhand von Ausführungsbeispielen unter.Bezugnahme auf die Zeichnung exemplarisch beschrieben, auf die im übrigen hinsichtlich der Offenbarung aller im Text nicht näher erläuterten erfindungsgemäßen Einzelheiten ausdrücklich verwiesen wird. Es zeigen:

Fig. 1a - 6a      die Isolinien der astigmatischen Abweichung,

Fig. 1b - 6b      die Isolinien des mittleren Gebrauchswerts,

Fig. 1c - 6c      die Isolinien des Flächenastigmatismus,

Fig. 1d - 6d      die Isolinien der mittleren Flächenbrechkraft für erfindungsgemäße Brillengläser,

Fig. 7a - 10a      die Pfeilhöhen weiterer Ausführungsbeispiele,

Fig. 7b - 10b      die Isolinien der astigmatischen Abweichung,

Fig. 7c - 10c      die Isolinien des mittleren Gebrauchswerts,

Fig. 7d - 10d      die Isolinien des Flächenastigmatismus,

Fig. 7e - 10e      die Isolinien der mittleren Flächenbrechkraft für erfindungsgemäße Brillengläser.

## Beschreibung von Ausführungsbeispielen

Bei allen dargestellten Ausführungsbeispielen ist die progressive Fläche ohne Beschränkung der Allgemeinheit die augenseitige Fläche. Bei der Vorderfläche handelt es sich um eine sphärische oder um eine torische Fläche.

In allen Figuren ist die Abszisse (x-Achse) die horizontale Achse und der Ordinate (y-Achse) die vertikale Achse in Gebrauchsstellung.

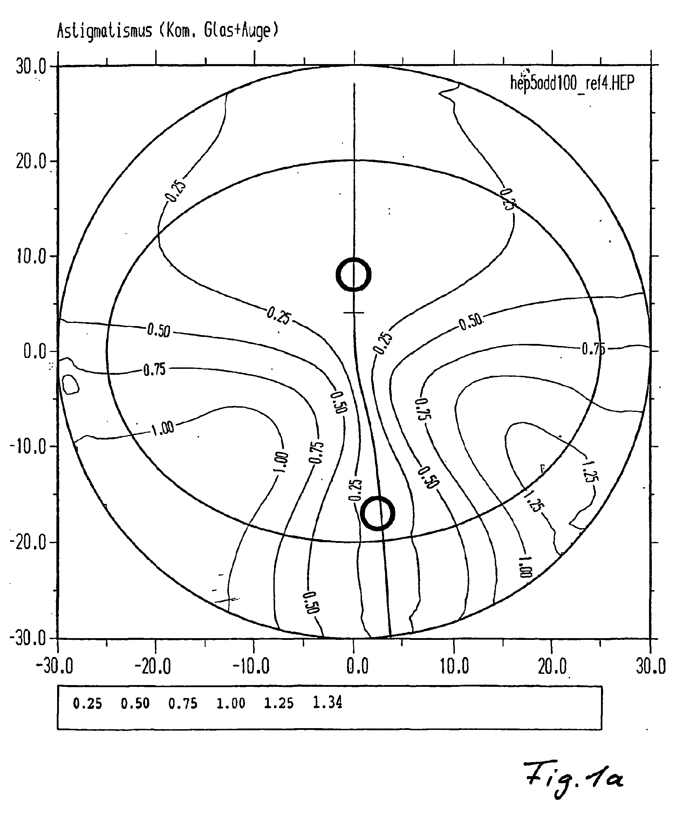

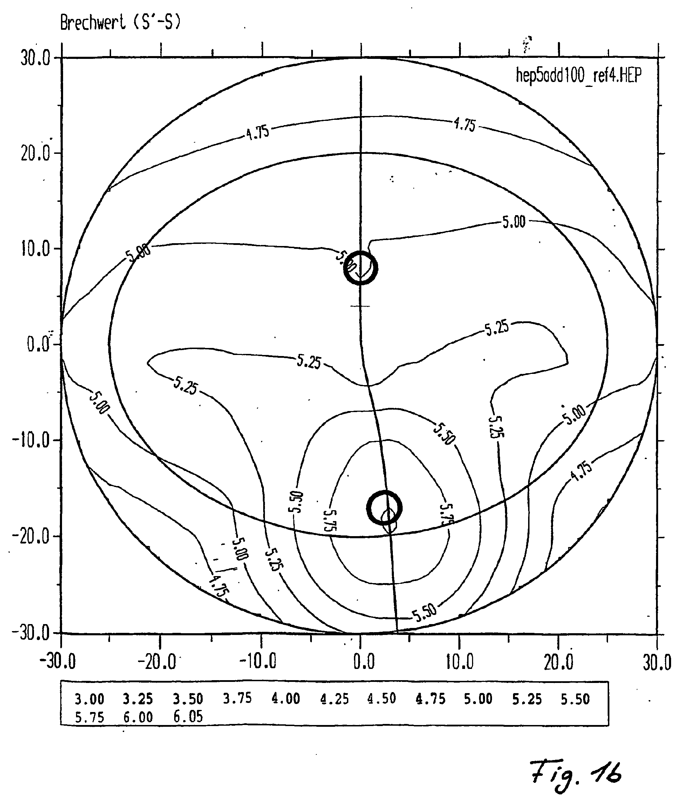

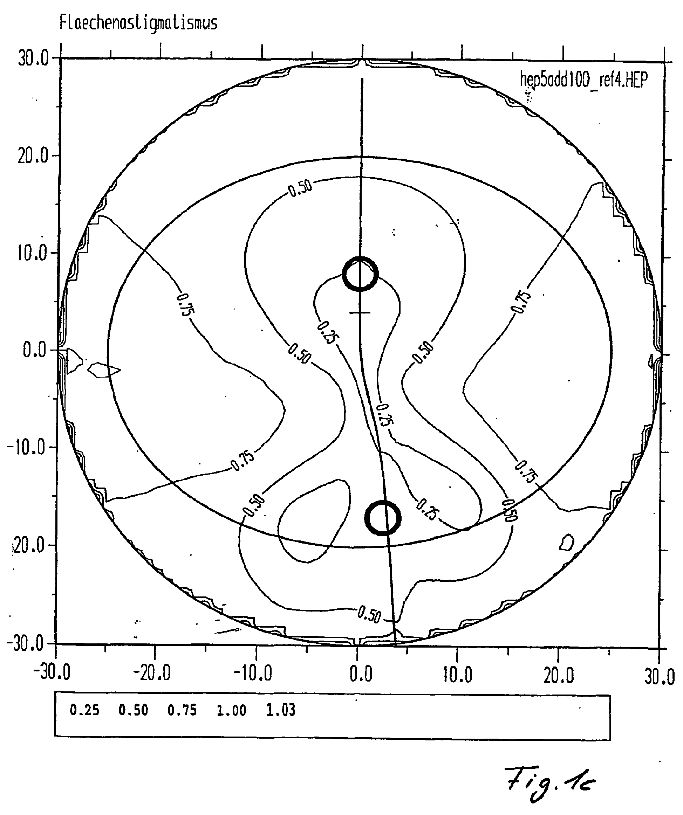

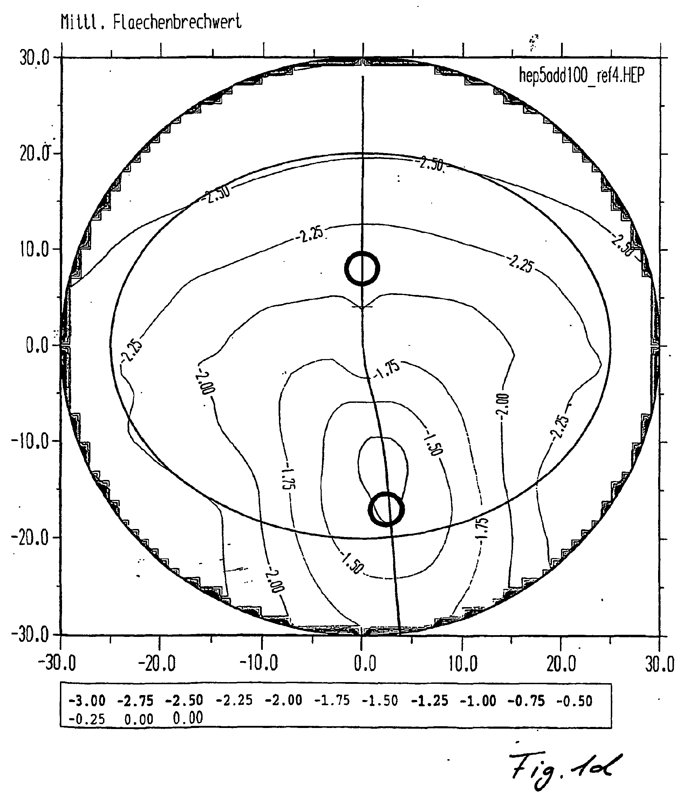

Das in den Figuren 1 dargestellte Ausführungsbeispiel hat im Fernteil einen mittleren Gebrauchswerts von 5 dpt; die Addition beträgt 1 dpt.

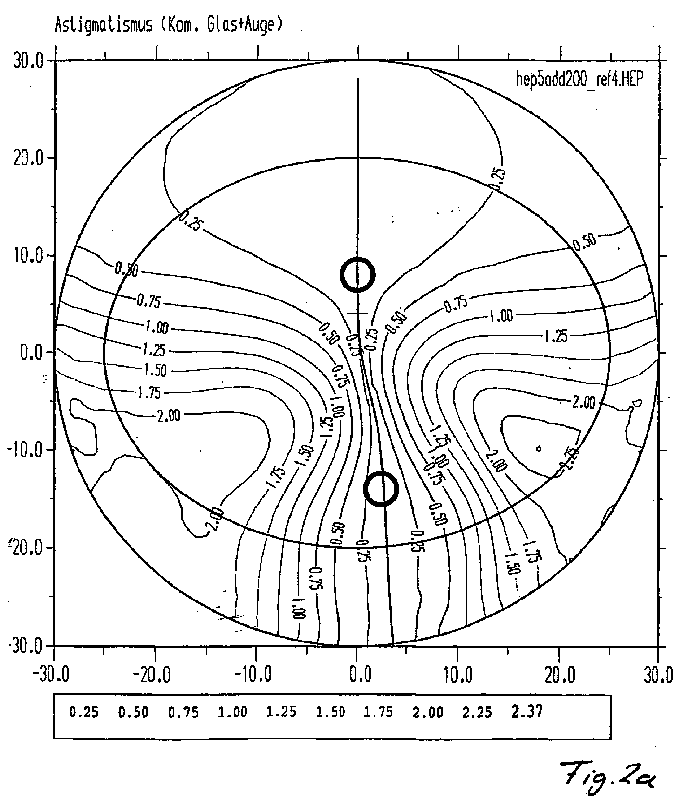

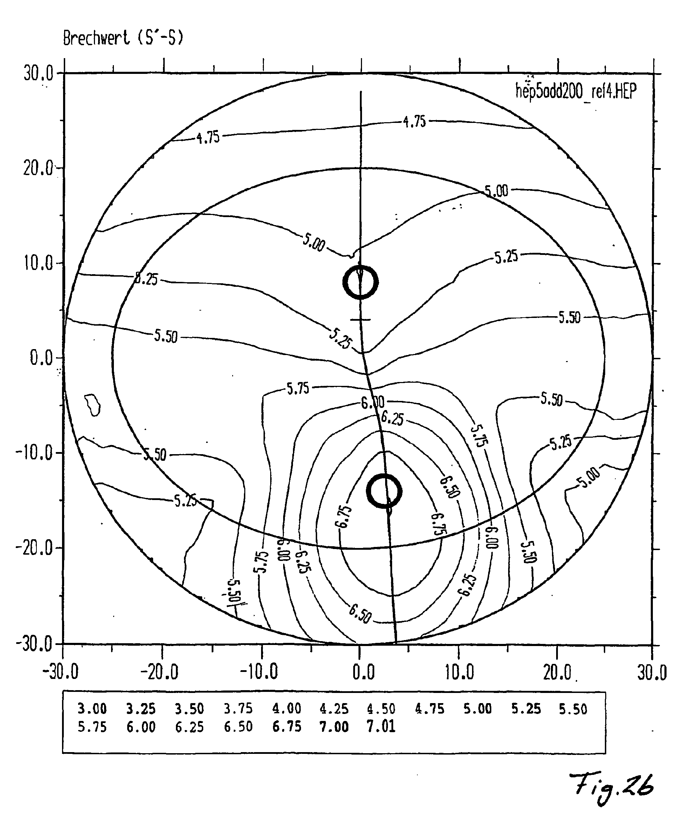

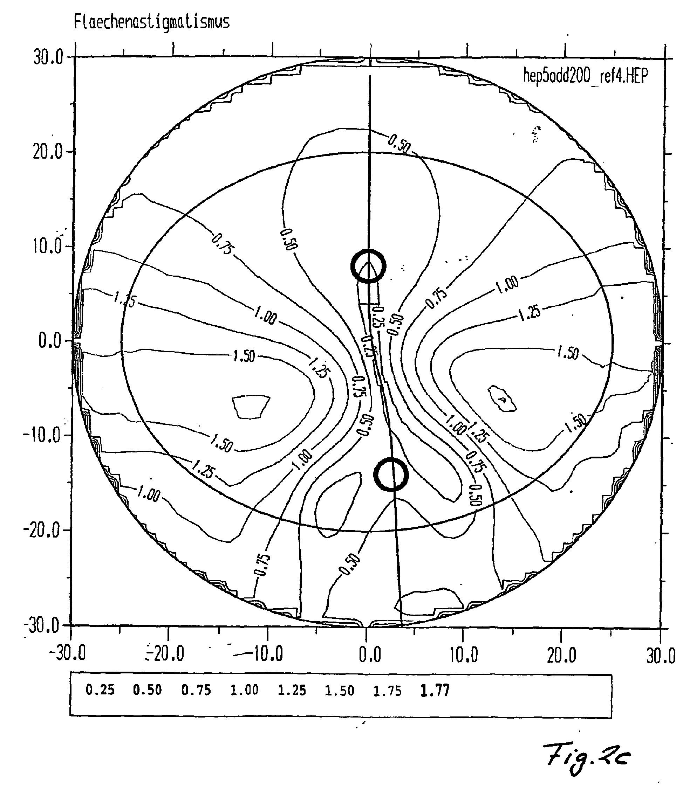

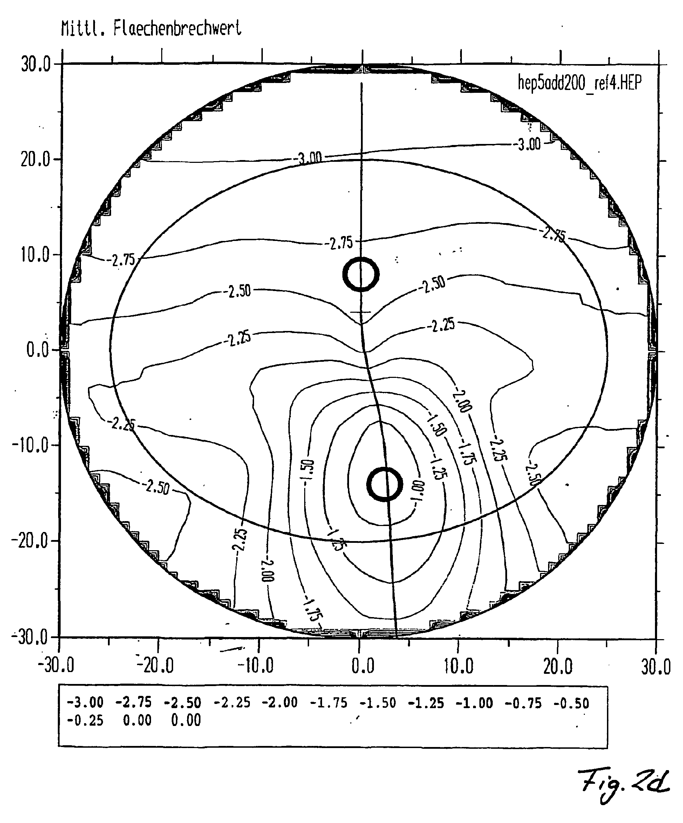

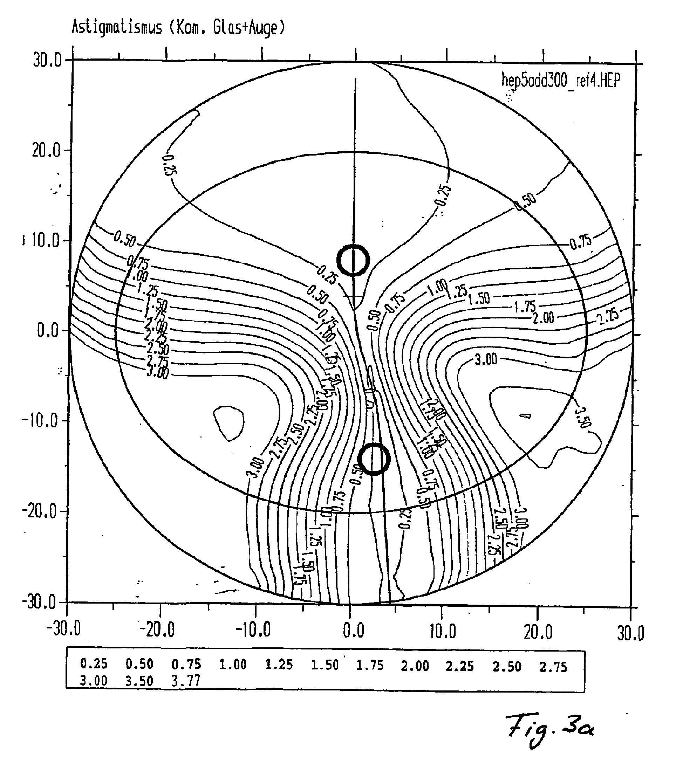

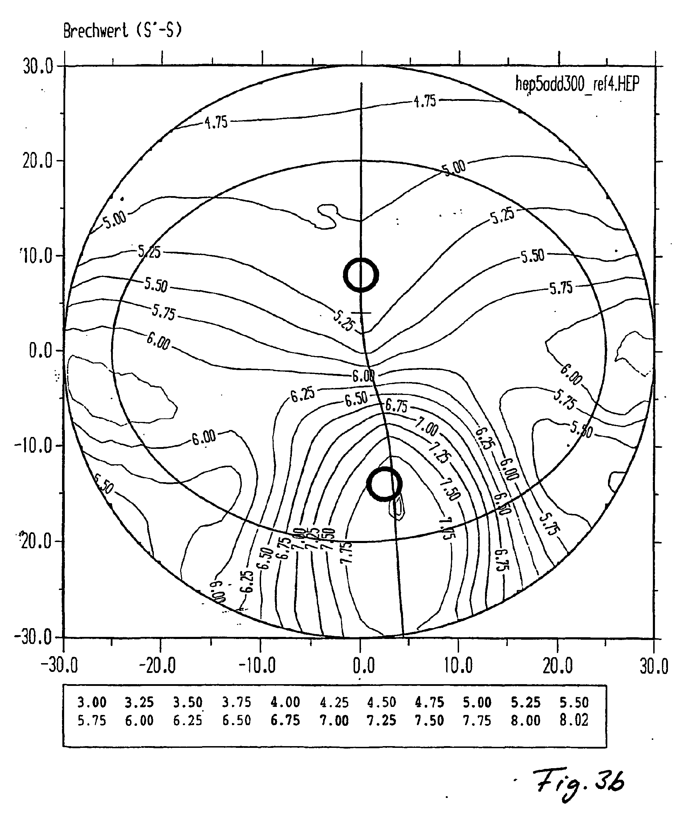

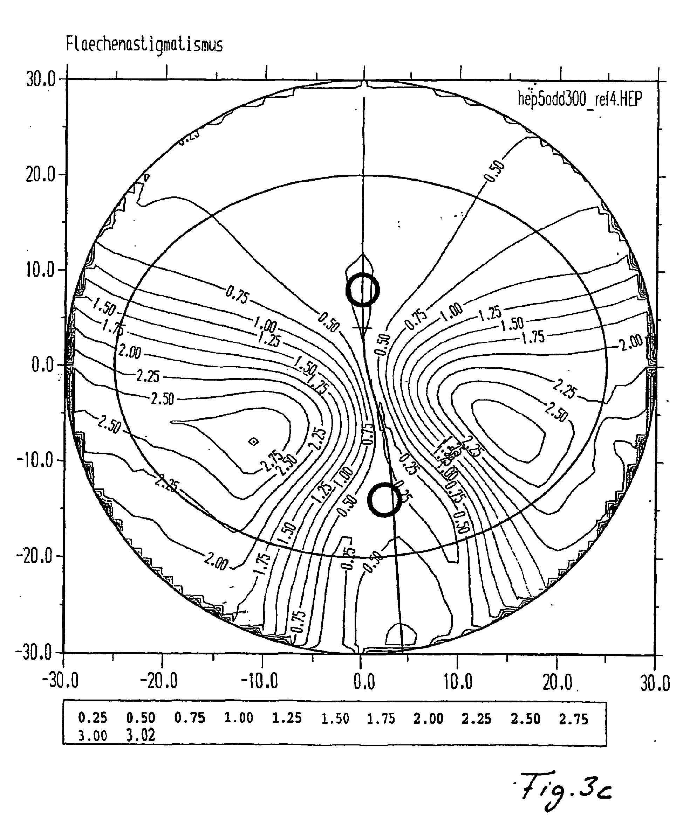

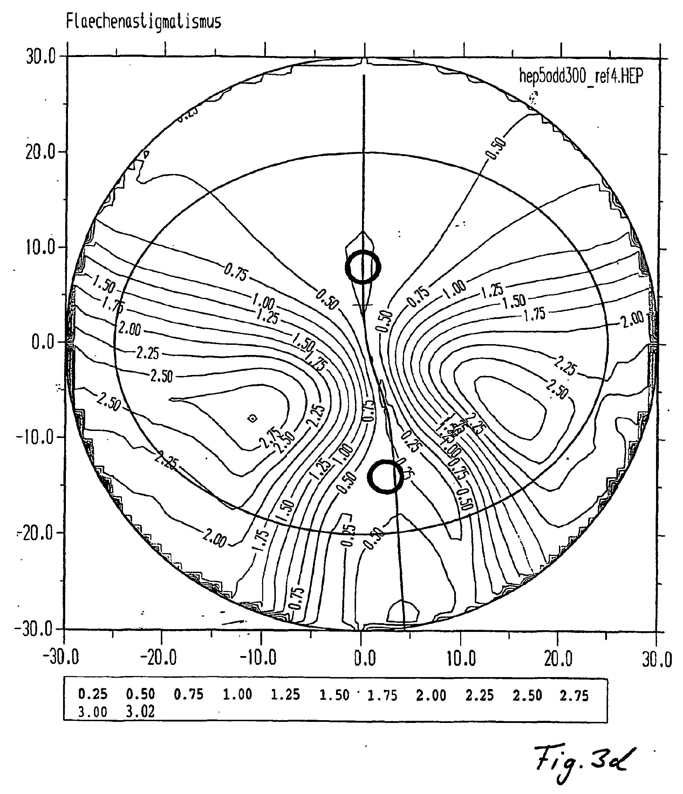

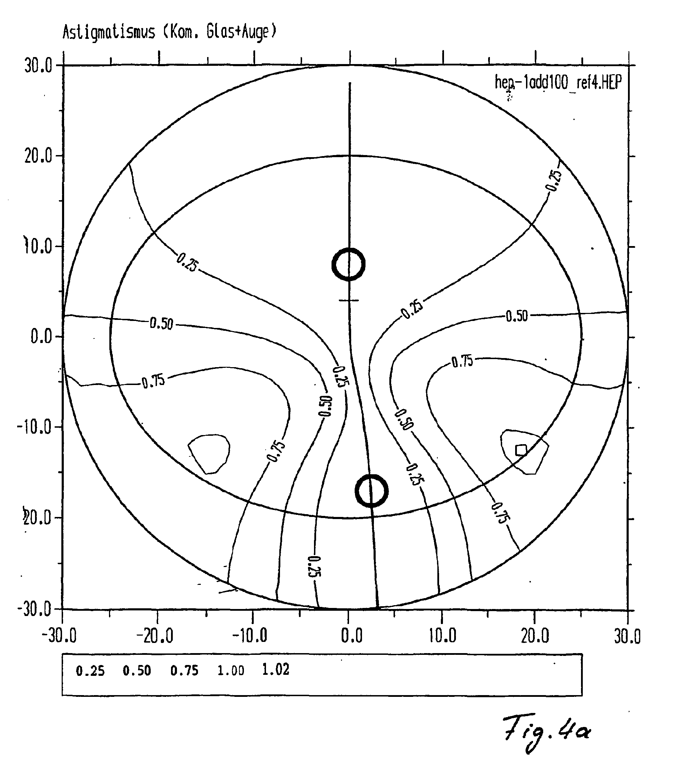

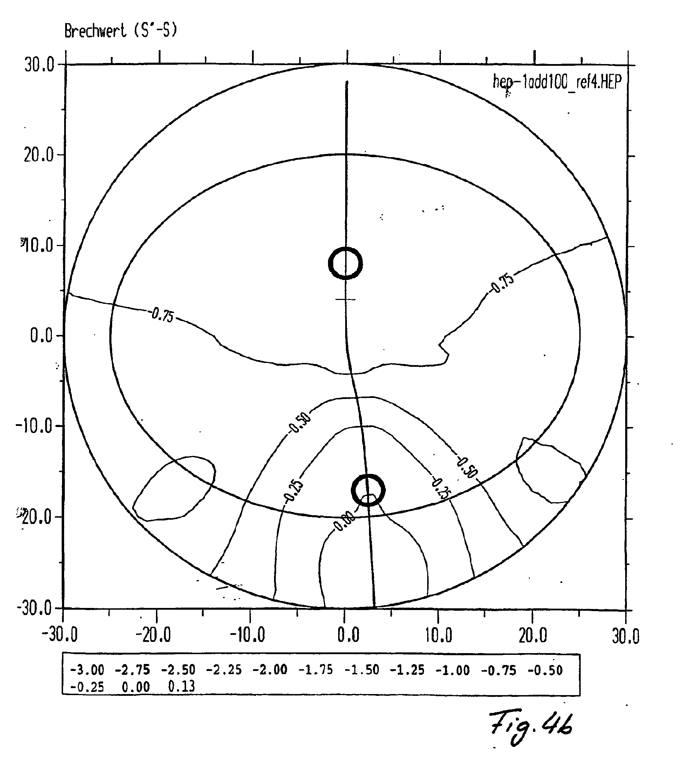

Die in den Figuren 2 und 3 dargestellten Ausführungsbeispiele haben im Fernteil den gleichen mittleren Gebrauchswert, ihre Addition beträgt jedoch 2 bzw. 3 dpt.

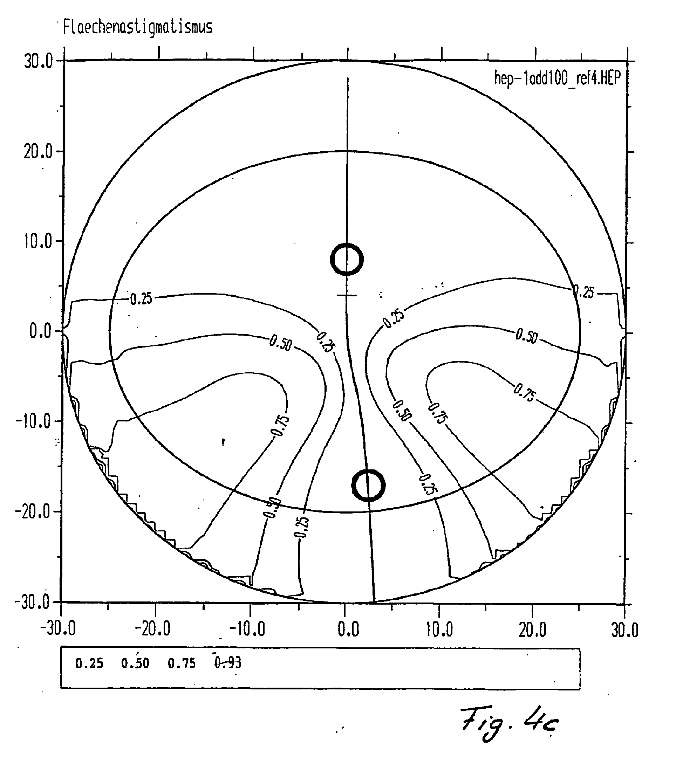

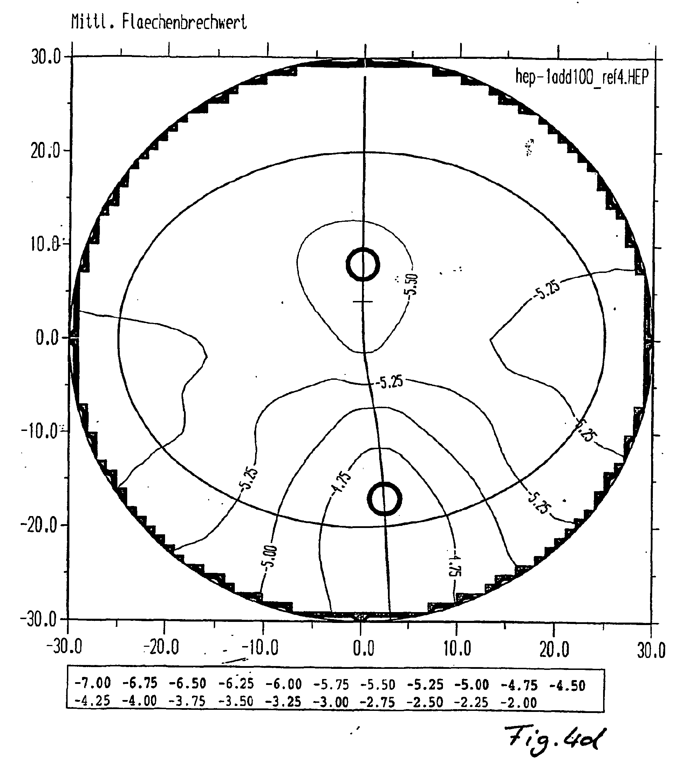

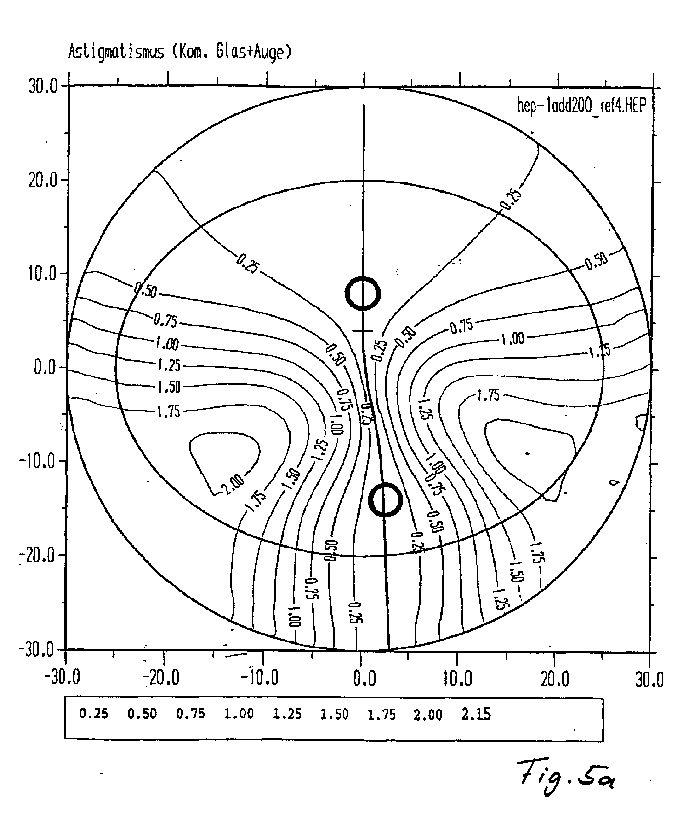

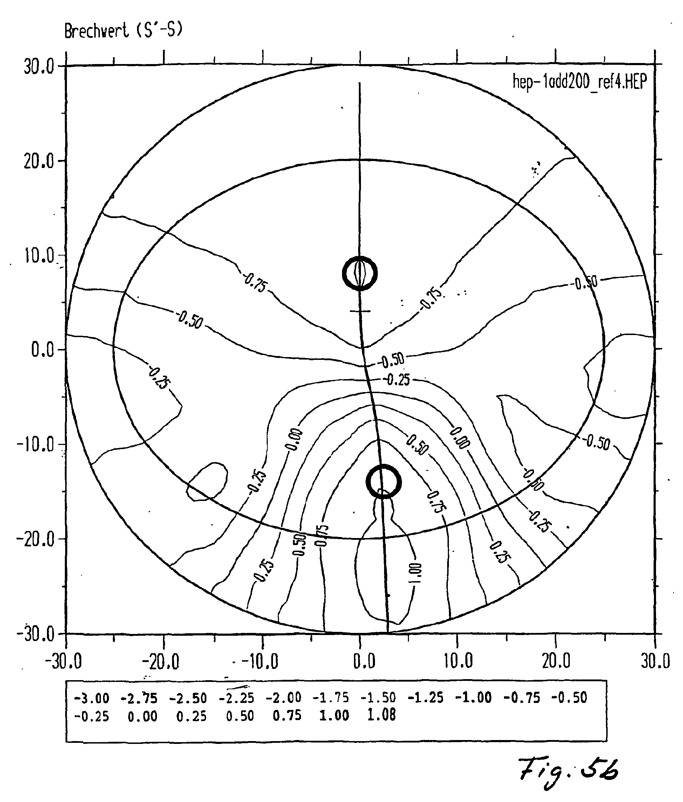

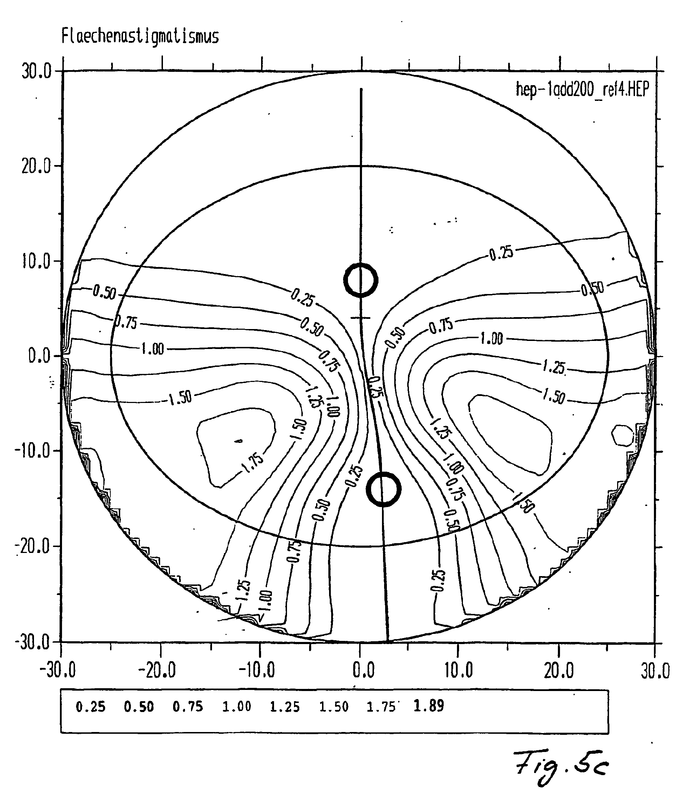

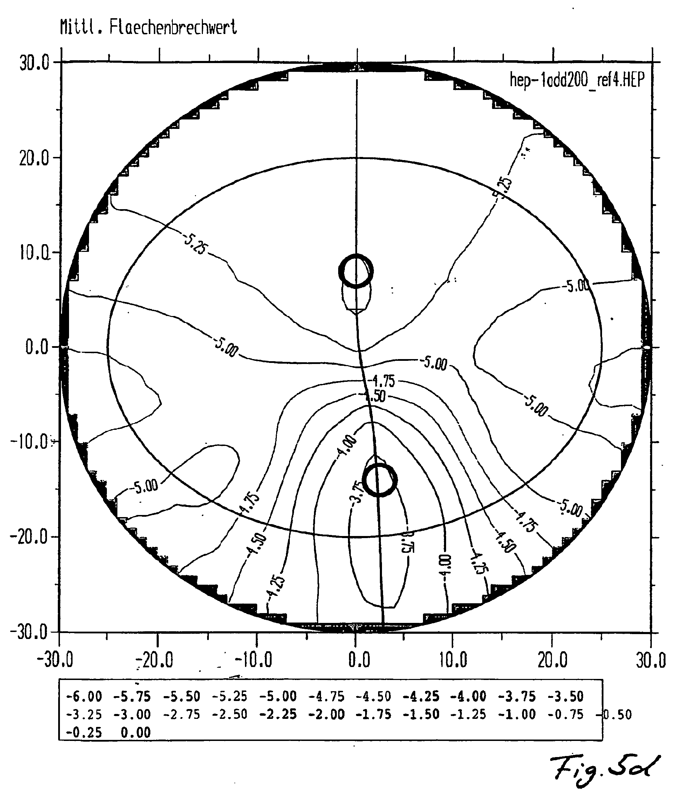

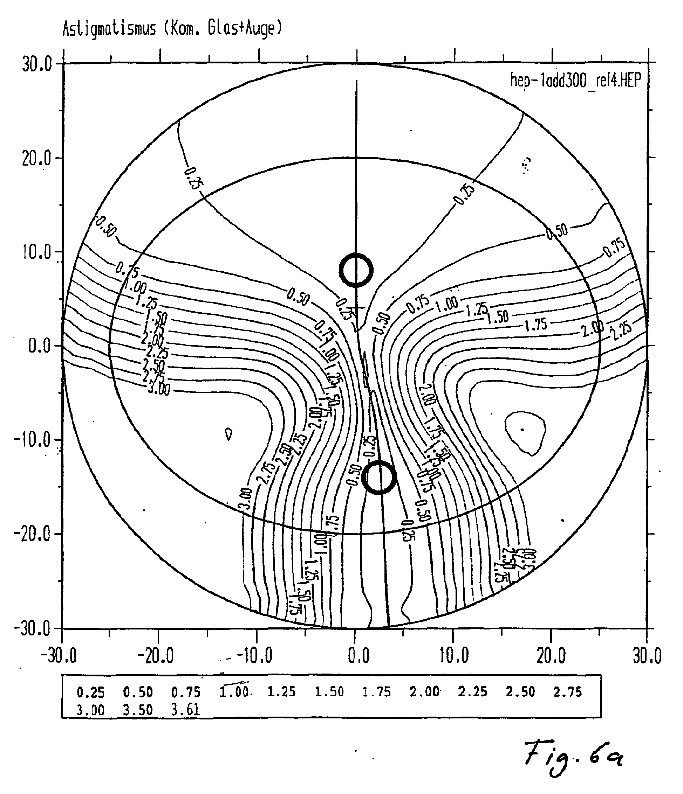

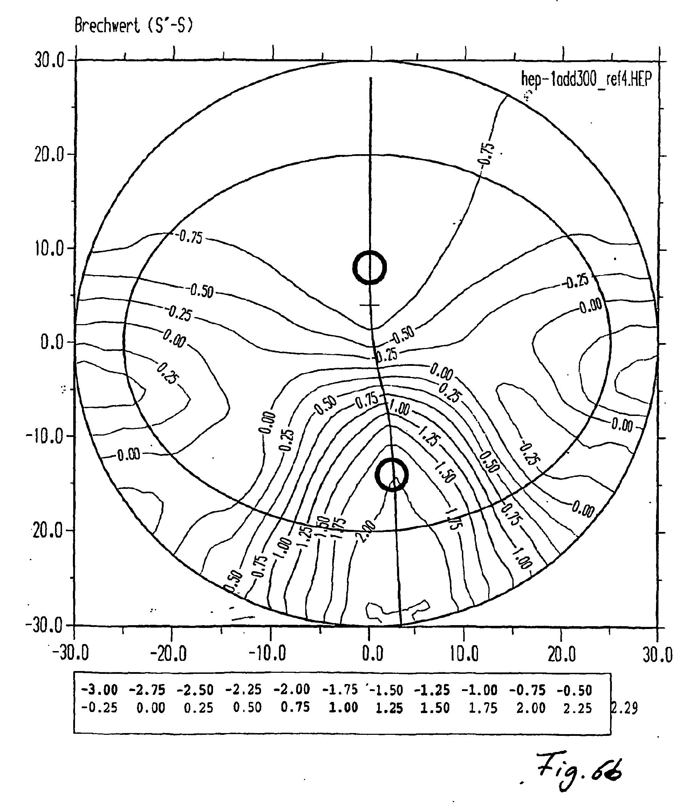

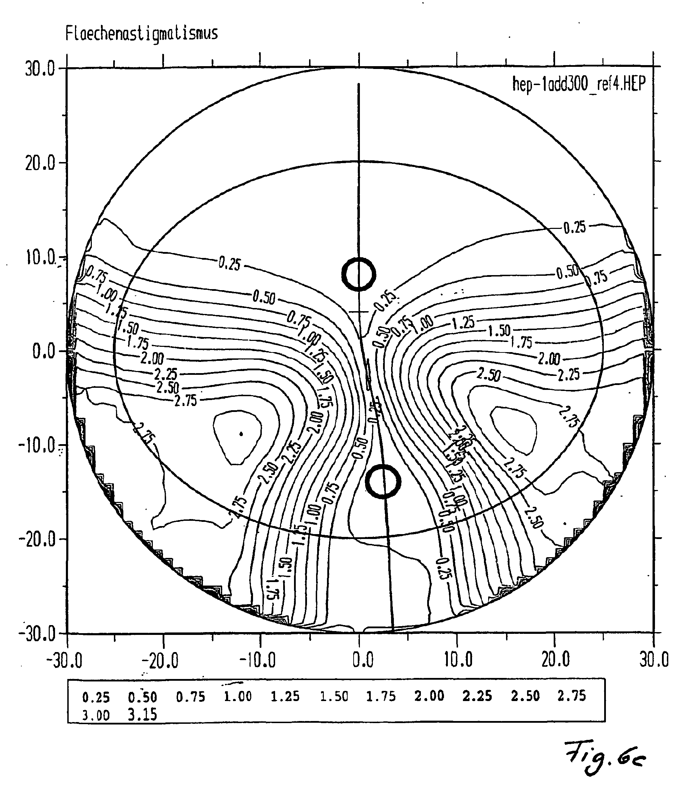

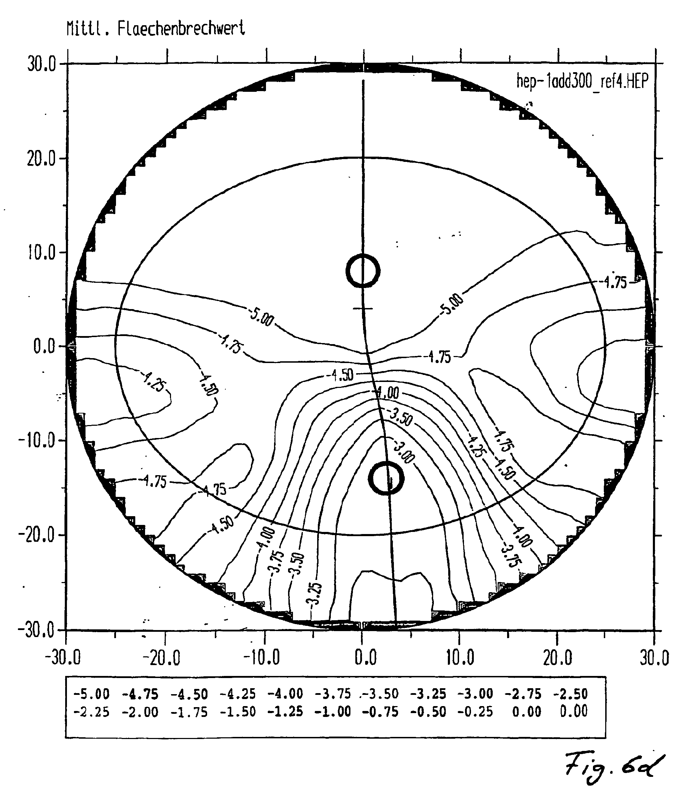

Die in den Figuren 4 bis 6 dargestellten Ausführungsbeispiele haben im Fernteil einen mittleren Gebrauchswert von -1,0 dpt, der Addition beträgt 1, 2 bzw. 3 dpt.

Der Fern- und der Nahbezugspunkt sind jeweils mit Kreisen dargestellt, der Zentrierpunkt ist mit einem Kreuz bezeichnet - ihre Lage ist den jeweiligen Figuren zu entnehmen. Weiterhin ist der Verlauf der Hauptlinie, die erfindungsgemäß ermittelt worden ist, eingezeichnet.

Die Teilfiguren a der Figuren 1 bis 6 zeigen die astigmatische Abweichung innerhalb eines Kreises mit dem Radius 30 mm um einen Punkt, der 4 mm unterhalb des sogenannten Zentrierkreuzes liegt. Die astigmatische Abweichung ist der "Rest-Astigmatismus" des Systems Brillenglas/Auge und ist mittels sogenannter Isolinien beginnend mit der Isolinie 0,25 dpt dargestellt. Die Isolinien geben die Abweichung des Astigmatismus bzgl. Betrag und Achslage von der zylindrischen Verordnung - im Falle eines astigmatismusfreien Auges 0 dpt - an.

Die Teilfiguren b zeigen entsprechend die Isolinien für den mittleren Gebrauchswert dieser Ausführungsbeispiele der Erfindung. Der mittlere Gebrauchswert D ist der Mittelwert der Kehrwerte der bildseitigen Schnittweiten S'1 und S'2 minus der Objektentfernung, also der objektseitigen Schnittweite S

$$D = 0,5 * (S'1 + S'2) - S$$

und ist ebenfalls in Form sogenannter Isolinien beginnend mit der Isolinie 0,75 dpt dargestellt.

Entsprechend sind in den Teilfiguren c und d die Isolinien der Flächendaten, nämlich der Flächenastigmatismus und der mittlere Flächenbrechwert dargestellt. Zur Definition dieser Flächendaten wird auf die einleitenden Ausführungen verwiesen.

Die Fig. 1 bis 6 zeigen, daß sowohl der Fernteil als auch der Nahteil relativ groß sind. Weiterhin nimmt im Fernteil der mittlere Gebrauchswert zur Peripherie hin kaum zu, im Nahteil nur wenig ab. Die maximale astigmatische Abweichung ist sehr gering, der Unterschied zwischen der maximalen Abweichung nasal und temporal unbedeutend.

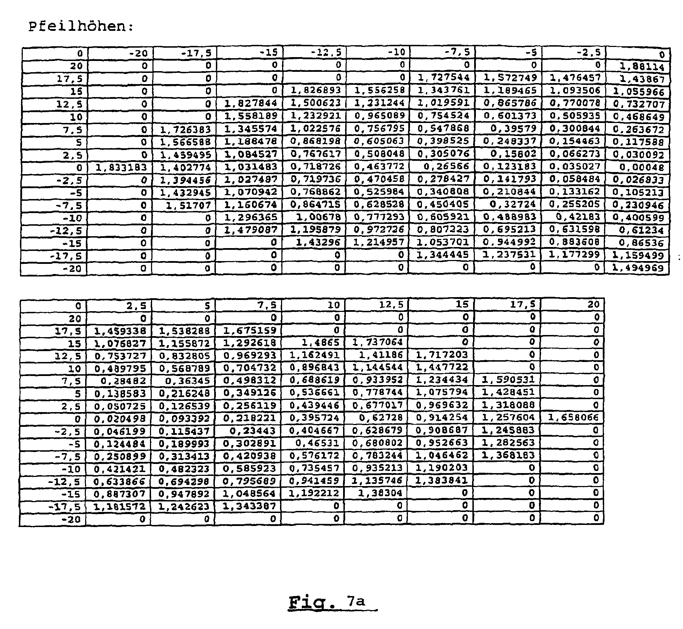

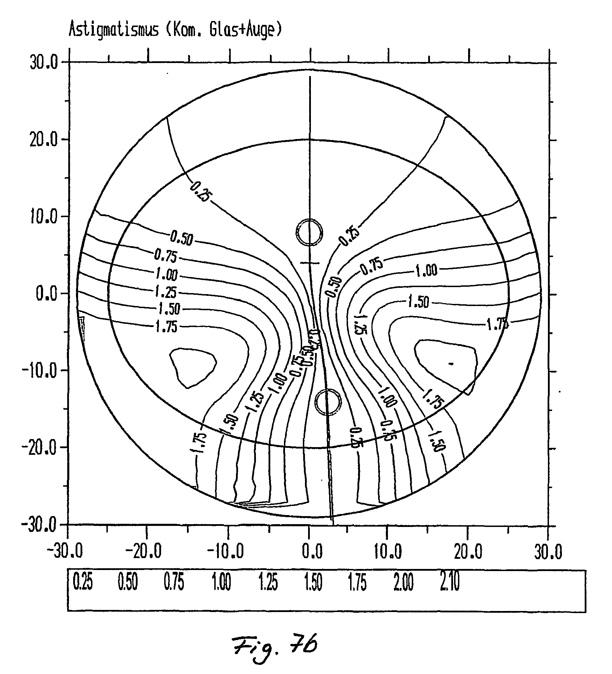

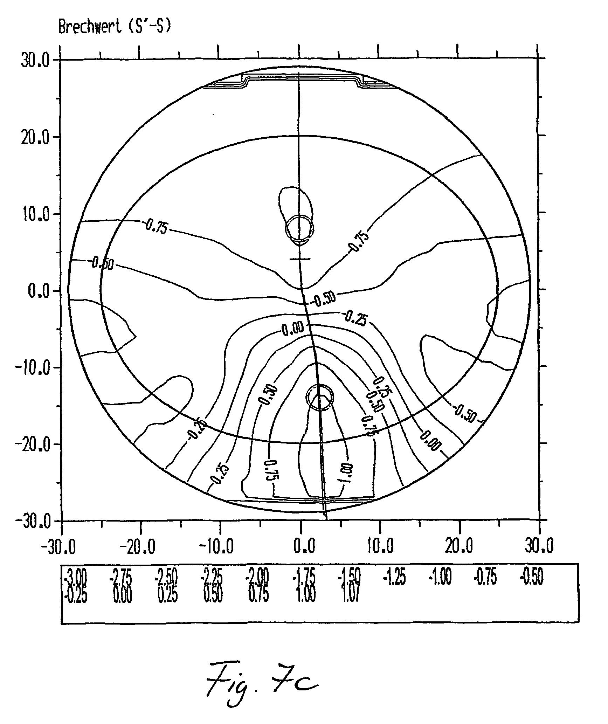

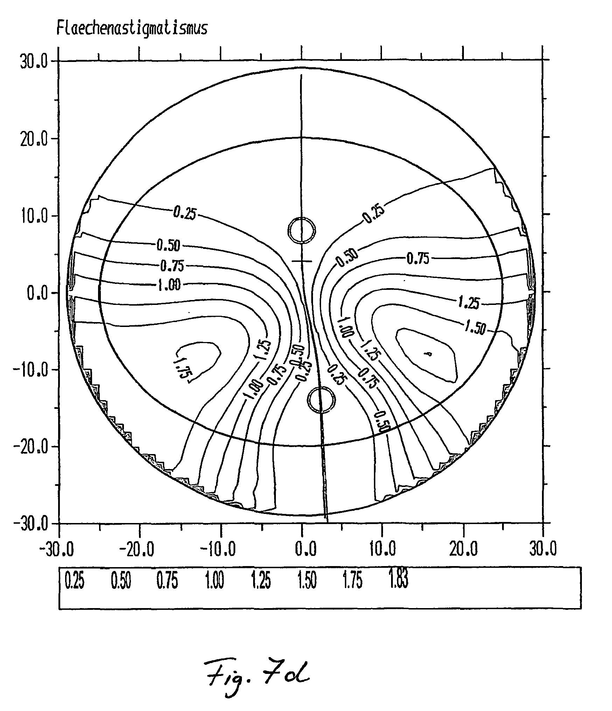

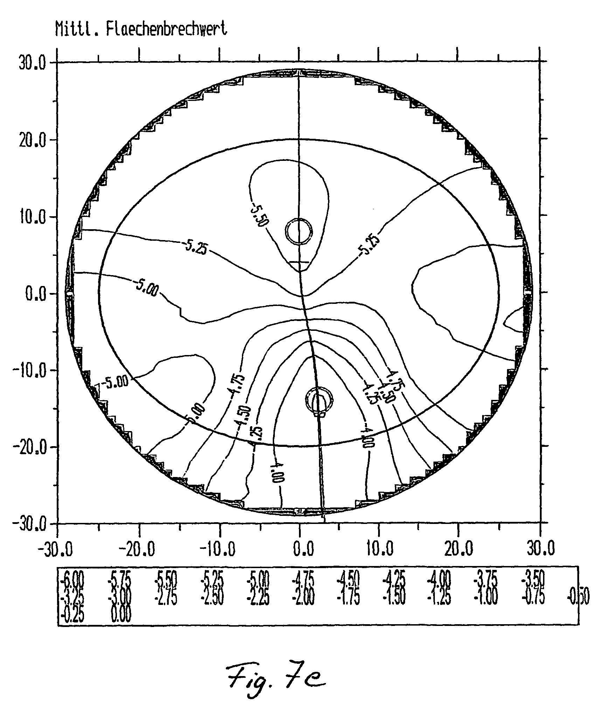

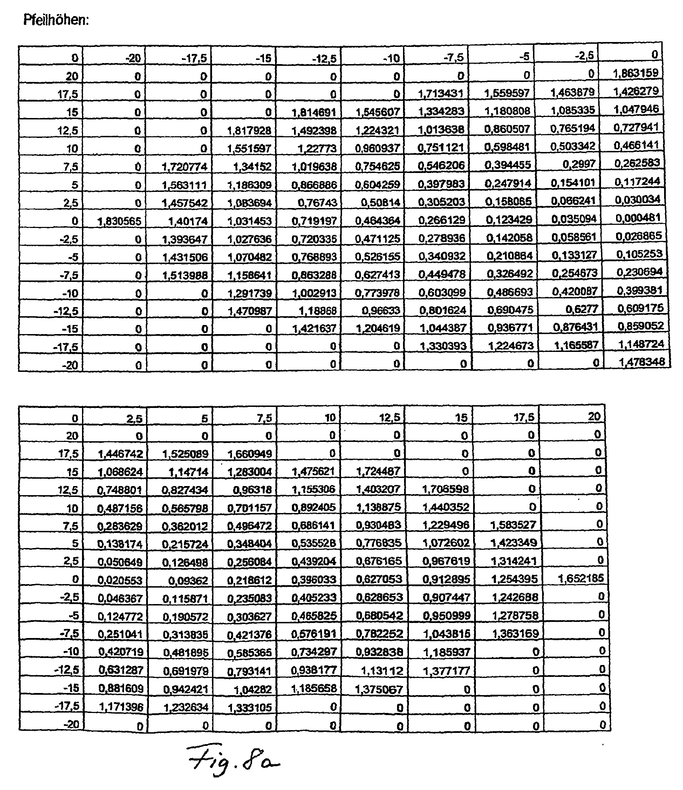

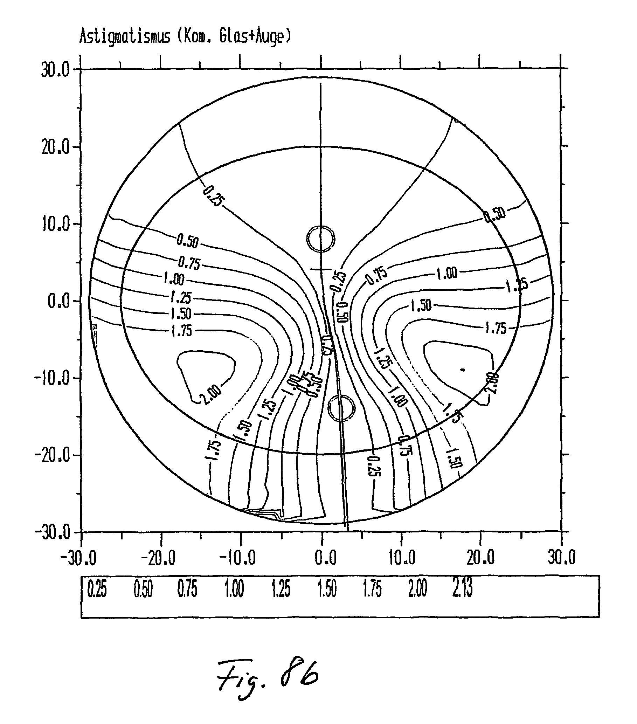

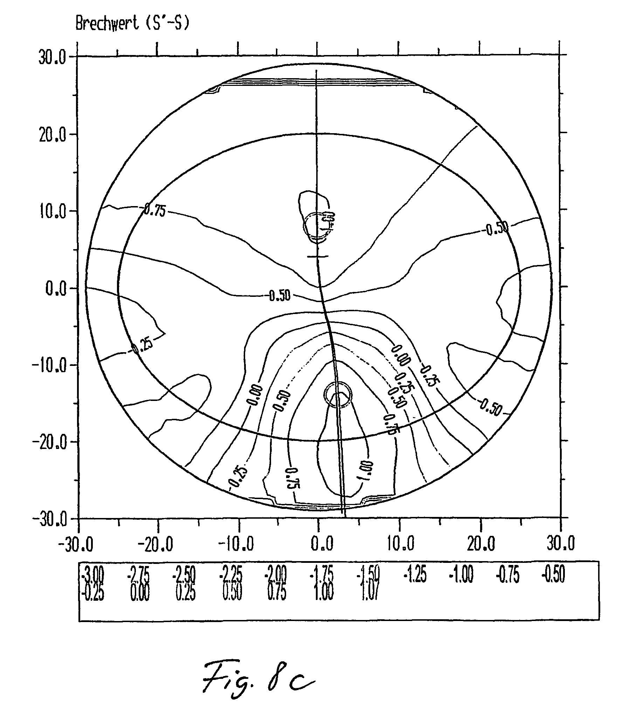

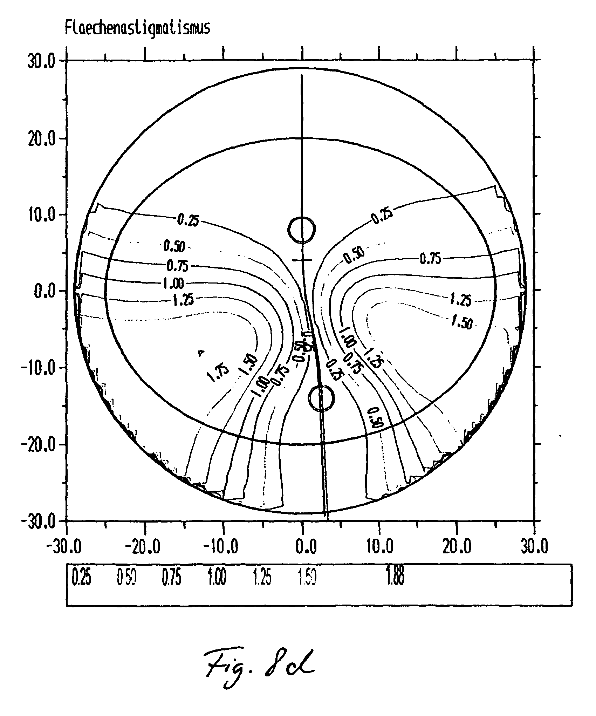

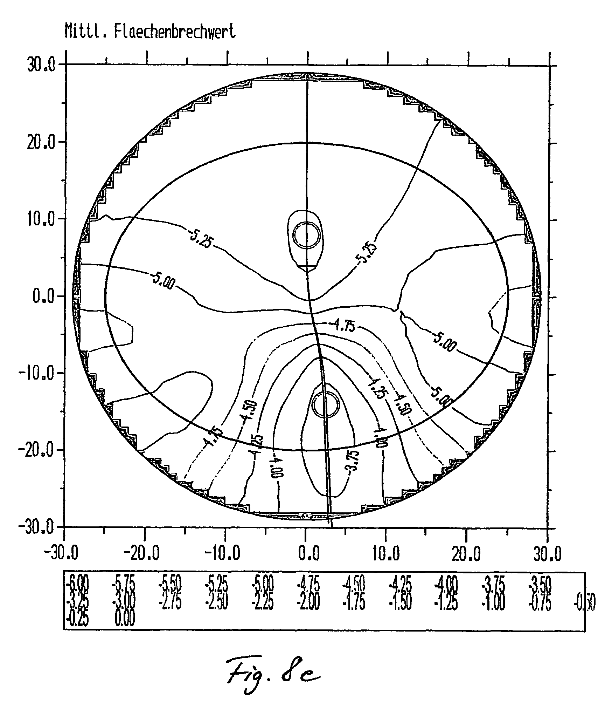

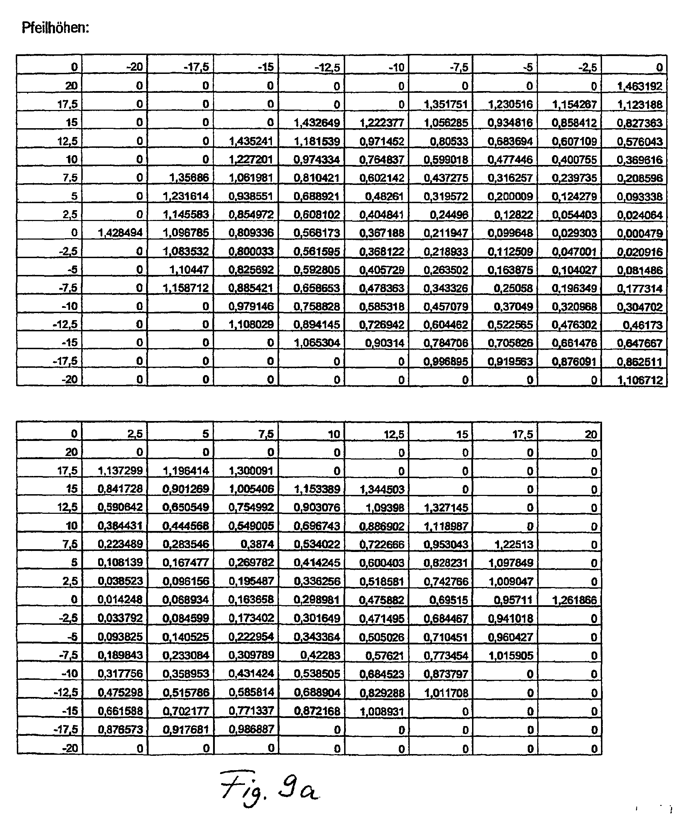

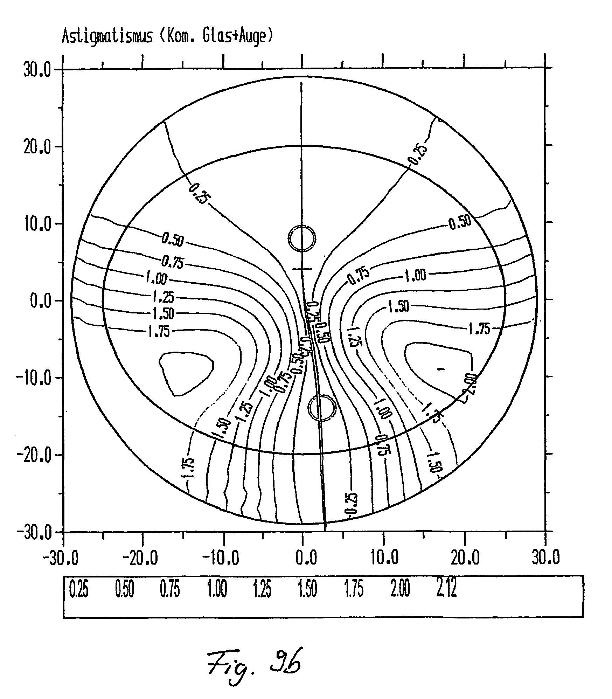

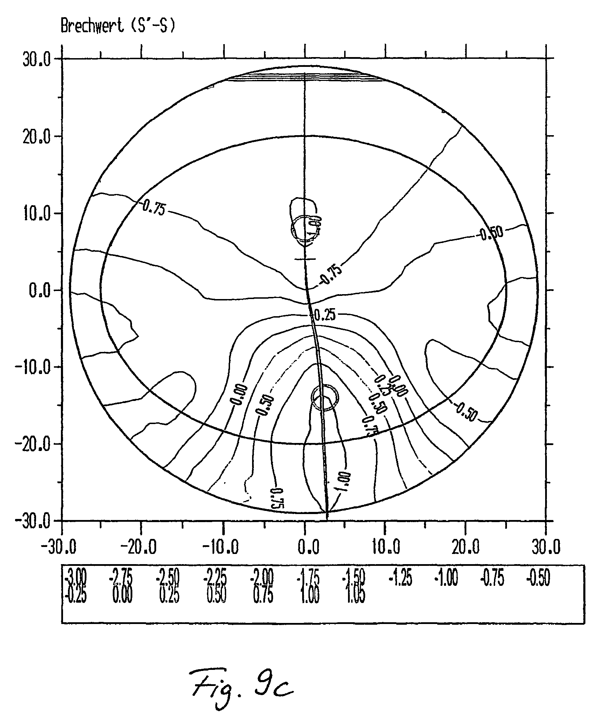

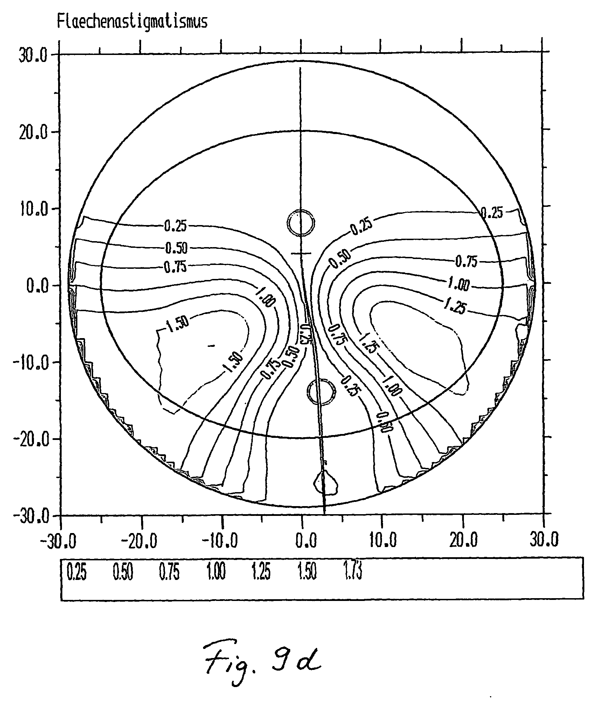

Allen vier in den Fig. 7 bis 10 dargestellten Ausführungsbeispielen ist gemeinsam, daß sie im Fernbezugspunkt eine sphärische Wirkung (mittlerer Gebrauchswert) von -1 dpt und eine Addition von 2 dpt haben. Eine astigmatische Verordnung ist nicht vorhanden. In allen Figuren ist die Abszisse (x-Achse) die horizontale Achse und der Ordinate (y-Achse) die vertikale Achse in Gebrauchsstellung.

Der Fern- und der Nahbezugspunkt sind in den jeweiligen Figuren b-e jeweils mit Kreisen dargestellt, der Zentrierpunkt ist mit einem Kreuz bezeichnet - ihre Lage ist den jeweiligen Figuren zu entnehmen. Weiterhin ist der Verlauf der Hauptlinie, die erfindungsgemäß ermittelt worden ist, eingezeichnet.

Die Teilfiguren a geben die Pfeilhöhen der progressiven augenseitigen Fläche für die jeweiligen Ausführungsbeispiele an. Unter Pfeilhöhen versteht man den Abstand eines Punktes mit den Koordinaten x und y (horizontale bzw. vertikale Achse in der Gebrauchsstellung des Brillenglases) von der Tangentialebene des Flächenscheitels. In den Tabellen sind jeweils in der linken Spalte die y-Werte (von -20 bis +20 mm) und in der obersten Zeile ab der Spalte 2 folgende die x-Werte (von -20 bis + 20mm) aufgetragen. Die Pfeilhöhen sind ebenfalls in Millimeter angeben. Der Wert 0 bedeutet, daß für diese x,y-Koordinaten keine Pfeilhöhe angegeben wird.

Die Teilfiguren b der Figuren 7 bis 10 zeigen die astigmatische Abweichung innerhalb eines Kreises mit dem Radius 30 mm um einen Punkt, der 4 mm unterhalb des sogenannten Zentrierkreuzes liegt. Die astigmatische Abweichung ist. der "Rest-Astigmatismus" des Systems Brillenglas/Auge und ist mittels sogenannter Isolinien beginnend mit der Isolinie 0,25 dpt dargestellt. Die Isolinien geben die Abweichung des Astigmatismus bzgl. Betrag und Achslage von der zylindrischen Verordnung - im Falle eines astigmatismusfreien Auges 0 dpt - an.

Die Teilfiguren c zeigen entsprechend die Isolinien für den mittleren Gebrauchswert dieser Ausführungsbeispiele der Erfindung. Der mittlere Gebrauchswert D ist der Mittelwert der Kehrwerte der bildseitigen Schnittweiten S'1 und S'2 minus der Objektentfernung, also der objektseitigen Schnittweite S

$$D = 0,5 * (S'1 + S'2) - S$$

und ist ebenfalls in Form sogenannter Isolinien beginnend mit der Isolinie 0,75 dpt dargestellt.

Entsprechend sind in den Teilfiguren d und e die Isolinien der Flächendaten, nämlich der Flächenastigmatismus und der mittlere Flächenbrechwert dargestellt. Zur Definition dieser Flächendaten wird auf die einleitenden Ausführungen verwiesen.

Die in den Fig. 7 bis 10 dargestellten Ausführungsbeispiele weisen folgende individualisierte Gebrauchsbedingungen auf:

| Beispiel | Fig. 7 | Fig. 8 | Fig. 9 | Fig. 10 |
|---|---|---|---|---|
| D1x | 4,55 | 4,55 | 3,41 | 3,41 |
| D1y | 4,55 | 4,55 | 3,41 | 3,98 |
| n | 1,597 | 1,597 | 1,597 | 1,597 |
| d | 1,59 | 1,59 | 1,59 | 1,59 |
| DRP | 1,0 | 1,0 | 1,0 | 1,0 |
| PD | 63 | 71 | 63 | 63 |
| HSA | 15 | 15 | 10 | 10 |
| Vorneigung | 0 | 8 | 8 | 8 |

Hierbei bedeuten:

D1x Brechwert der Vorderfläche in x-Richtung(dpt)

D1y Brechwert der Vorderfläche in y-Richtung(dpt)

n Brechungsindex des Glasmaterials

d Mittendicke der Brillenlinse in mm

DRP Dickenreduktionsprisma in cm/m

PD Pupillenabstand in mm

HSA Hornhaut/Scheitel-Abstand in mm

Vorneigungdes Brillenglases in Grad.

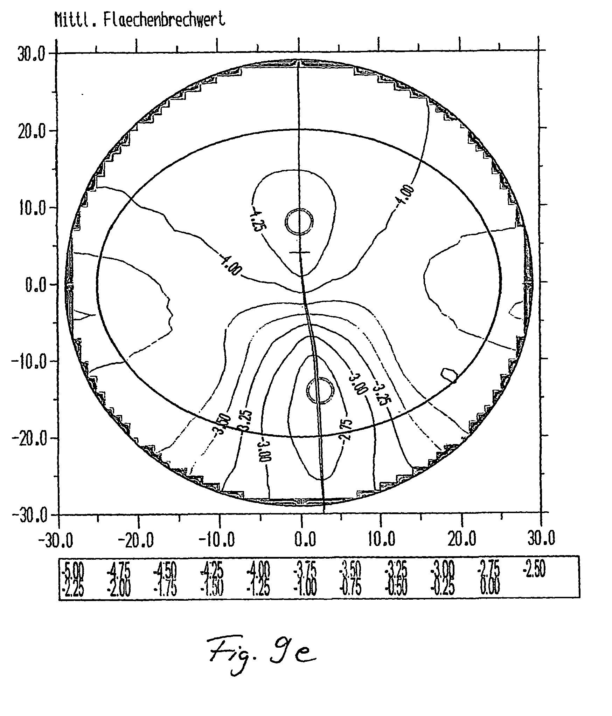

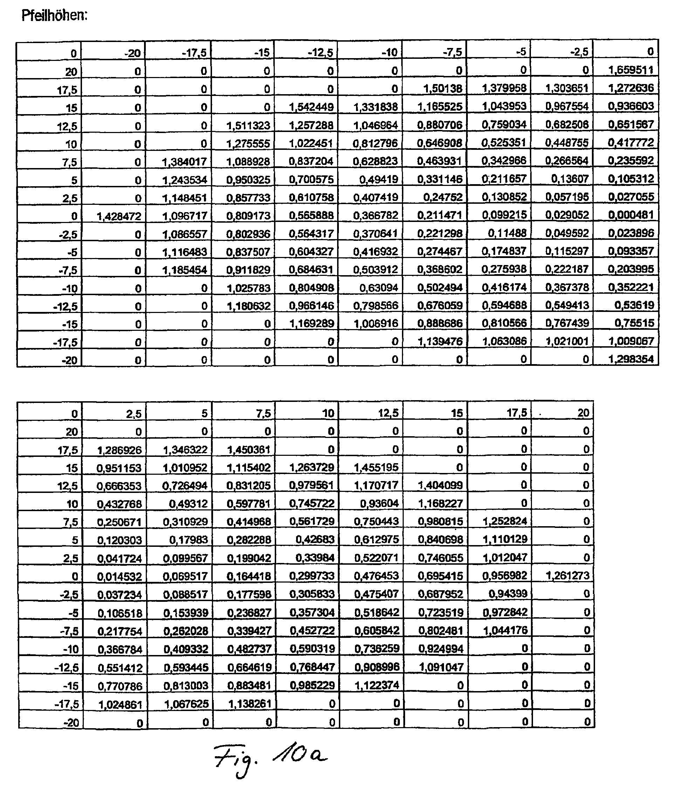

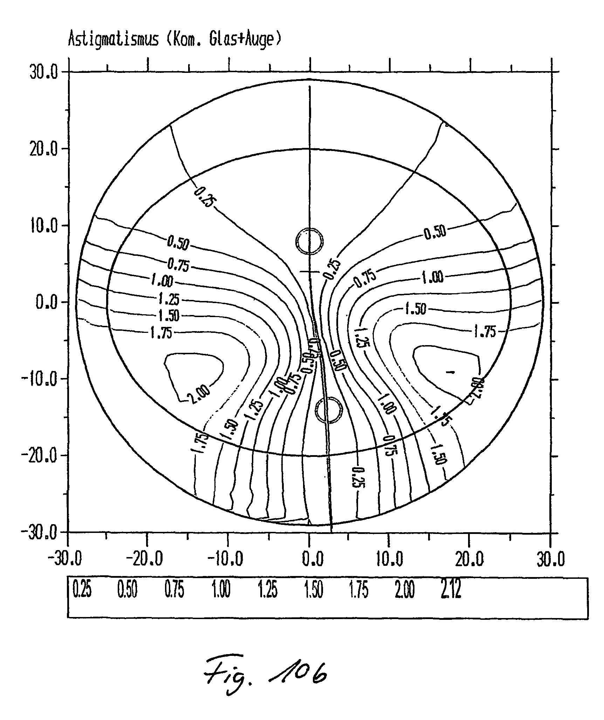

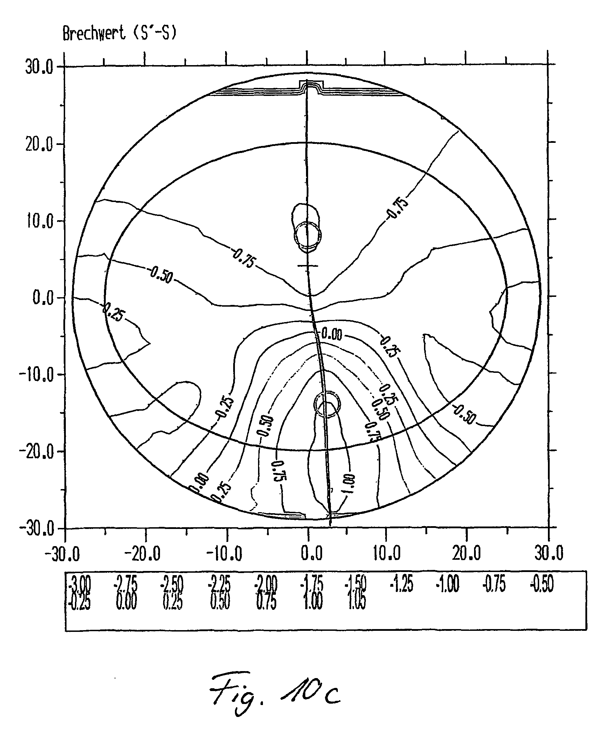

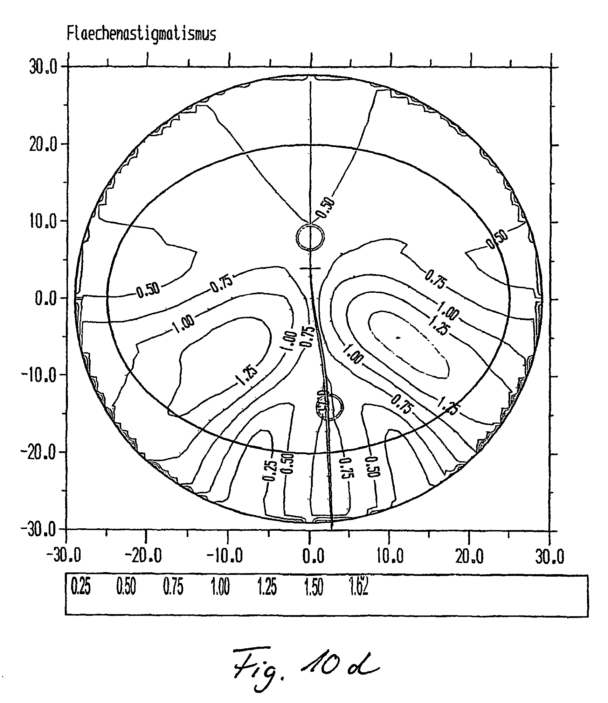

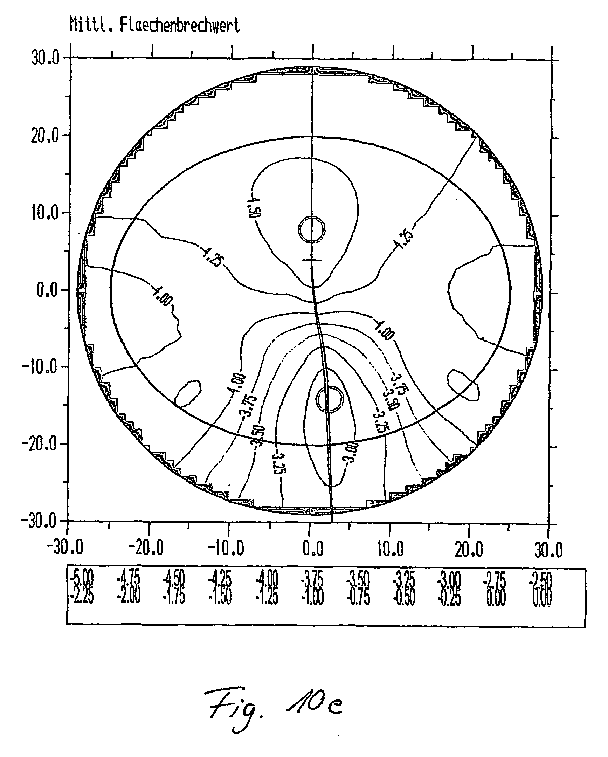

Trotz der individualisierten Gebrauchsbedingungen und des bei dem Beispiel gemäß Fig. 10 aus kosmetischen Gründen eingeführten Flächenastigmatismus der Vorderfläche unterscheiden sich die Isolinien in Gebrauchsstellung praktisch nicht, obwohl sich die Flächenwerte z.T. deutlich unterscheiden.

Selbstverständlich können die erfindungsgemäßen Verfahren auch auf die Berechnung und Herstellung von Brillengläsern mit zwei progressiven Flächen und/oder mit (zusätzlich) variierendem Brechnungsindex übertragen werden.


**Patentansprüche**

1. Verfahren zum Berechnen eines Brillenglases mit

- einem zum Blicken in größere Entfernungen und insbesondere "ins Unendliche" ausgelegten Bereich, nachfolgend als Fernteil bezeichnet,
- einem zum Blicken in kürzere Entfernungen und insbesondere "Lese-Entfernungen" ausgelegten Bereich, nach folgend als Nahteil bezeichnet, und
- einer zwischen Fernteil und Nahteil angeordneten Progressionszone, in der die Wirkung des Brillenglases von dem Wert in dem im Fernteil gelegenen Fernbezugspunkt auf den Wert des im Nahteil gelegenen Nahbezugspunktes längs einer zur Nase hin gewundenen Kurve, nachfolgend als Hauptlinie bezeichnet, um einen als Addition bezeichneten Wert zunimmt,

**gekennzeichnet durch** folgende Schritte:

a. als Anfangswerte werden ein Verlauf der Projektion $x_0(y)$ der Hauptlinie in die x,y-Ebene sowie Eigenschaften des Brillenglases längs der Hauptlinie unter Berücksichtigung der sphärischen, zylindrischen sowie gegebenenfalls prismatischen Verordnungwerte und der Addition sowie der Pupillendistanz vorgegeben und mit diesen Vorgaben zumindest ein Streifen zweiter Ordnung der progressive Fläche eines Brillenglases berechnet,

b. es wird eine Objektabstandsfunktion Al(y) vorgegeben, die die Änderung der Objektentfernung bei einer Blickbewegung und insbesondere einer Blicksenkung beschreibt,

c. in jedem Horizontalschnitt des progressiven Brillenglases wird der Durchstoßpunkt des Hauptstrahls **durch** die progressive Fläche bestimmt, für den der Abstand des Schnittpunkts dieses Hauptstrahles mit einer Ebene, die die Pupillendistanz halbiert, gleich dem **durch** die Objektabstandsfunktion Al(y) gegebenen Objektabstand ist,

d. für die Gesamtheit dieser in der Hauptblicklinie liegenden Durchstoßpunkte wird der Verlauf der Projektion $x'_0(y)$ in die x,y-Ebene berechnet,

e. der Verlauf $x'_0(y)$ wird gleich $x_0(y)$ gesetzt und die Übereinstimmung geprüft,

f. anschließend werden die Schritte a. bis e. solange iterativ wiederholt, bis die Projektion $x'_0(y)$ der Hauptblicklinie gleich dem Verlauf der für die Berechnung der entsprechenden Fläche verwendeten Projektion $x_0(y)$ der Hauptlinie ist,

wobei ein Streifen zweiter Ordnung ein Bereich der progressiven Fläche längs der Hauptlinie ist, welcher **durch** die Beziehung

$$z\,(x,y) = x_0(y) + z_0(y) + \sum_{i=1}^{n} a_i(y) \cdot (x - x_0(y))^i$$

beschrieben wird und in dem der Koeffizientenverlauf $a_1(y)$ und $a_2(y)$ in eindeutiger Weise **durch** die Anfangswerte bestimmt ist.

2.  Verfahren nach Anspruch 1,
    **dadurch gekennzeichnet, daß** die vorgegebenen Eigenschaften des Brillenglases Flächeneigenschaften sind.

3.  Verfahren nach Anspruch 2,
    **dadurch gekennzeichnet, daß** die Flächeneigenschaften der Flächenastigmatismus $A_0(y)$ und die Flächenbrechkraft $D_0(y)$ sind.

4.  Verfahren nach Anspruch 2 oder 3,
    **dadurch gekennzeichnet, daß** als Anfangsbedingungen die Pfeilhöhe z und die Ableitungen δz/δx und δz/δy an einer bestimmten Stelle der Hauptlinie vorgegeben werden.

5.  Verfahren nach Anspruch 1,
    **dadurch gekennzeichnet, daß** die vorgegebenen Eigenschaften des Brillenglases Eigenschaften in Gebrauchsstellung sind.

6.  Verfahren nach Anspruch 5,
    **dadurch gekennzeichnet, daß** die vorgegebenen Eigenschaften der Astigmatismus und die Brechkraft der Kombination "Brillenglas/Auge" sind.

7.  Verfahren nach Anspruch 6,
    **dadurch gekennzeichnet, daß** als Anfangsbedingungen die Dicke des Brillenglases und die prismatische Wirkung an einer bestimmten Stelle vorgegeben werden.

8.  Verfahren nach einem der Ansprüche 1 bis 7,
    **dadurch gekennzeichnet, daß** als weitere Anfangsbedingungen die Flächenbeschreibung der zweiten Fläche und die Brechzahl des Brillenglases vorgegeben werden.

9.  Verfahren nach Anspruch 8,
    **dadurch gekennzeichnet, daß** zusätzlich die Pupillendistanz, der Augendrehpunktsabstand sowie die Vorneigung und die Seitenneigung des Brillenglases als Anfangsbedingungen vorgegeben werden.

10. Verfahren nach Anspruch 9,
    **dadurch gekennzeichnet, daß** diese Größen sowie die Objektabstandsfunktion Al(y) als Durchschnittswerte vorgegeben werden.

**11.** Verfahren nach Anspruch 9,
**dadurch gekennzeichnet, daß** diese Größen sowie die Objektabstandsfunktion Al(y) als die individuell ermittelte Daten des künftigen Brillenträgers vorgegeben werden.

**12.** Verfahren nach Anspruch 11,
**dadurch gekennzeichnet, daß** zusätzlich die Form der tatsächlichen Brillenfassung und deren Anordnung vor den Augen des Brillenträgers berücksichtigt werden.

**13.** Verfahren nach einem der Ansprüche 1 bis 12,
**dadurch gekennzeichnet, daß** die Projektion $x_0(y)$ der Hauptlinie sowie die vorgegebenen Eigenschaften durch kubische oder höhergradige Splinefunktionen oder eine Funktion f(y) der Form

$$f(y) = b + a' - \frac{a}{(1 + e^{c(v+d)})^m} + \sum_i g_i y^i$$

beschrieben werden.

**14.** Verfahren nach einem der Ansprüche 1 bis 13,
**dadurch gekennzeichnet, daß** ausgehend von den Streifen zweiter Ordnung, für den die Hauptlinie mit der Hauptblicklinie (zumindest innerhalb der vorgegebenen Grenzen) übereinstimmt, die einzelnen Horizontalschnitte ($y = y_c$), die durch

$$\bar{z}(x, y_c) = x_0(y_c) + z_0(y_c) + \sum_{i=1}^{n} a_i \cdot (x - x_0(v_c))^i$$

beschrieben werden, berechnet werden.

**15.** Verfahren nach einem der Ansprüche 1 bis 13,
**dadurch gekennzeichnet, daß** ausgehend von dem Streifen zweiter Ordnung, in dem die Hauptlinie mit der Hauptblicklinie (zumindest innerhalb der vorgegebenen Grenzen) übereinstimmt, die gesamte Fläche mittels Splinefunktionen und üblicher Optimierungsverfahren berechnet wird.

**16.** Verfahren nach einem der Ansprüche 1 bis 15,
**dadurch gekennzeichnet, daß** der Objektabstand der Abstand vom Durchstoßpunkt des Hauptstrahls durch die Vorderfläche bis zum Schnittpunkt des Hauptstrahles mit der Mittelebene ist, die die Pupillendistanz halbiert.

**17.** Verfahren nach einem der Ansprüche 1 bis 16,
**dadurch gekennzeichnet, daß** die progressive Fläche die augenseitigen Fläche ist.

**18.** Verfahren nach Anspruch 17,
**dadurch gekennzeichnet, daß** die Vorderfläche eine sphärische oder asphärische Fläche ist.

**19.** Verfahren zur Herstellung eines Brillenglases, von Gießformen für das Gießen, von Absenkformen oder von Stempeln für das Pressen von Brillengläsern aus einem Kunststoffmaterial,
**dadurch gekennzeichnet, daß** die Daten einer nach einem der Ansprüche 1 bis 18 berechneten Fläche für die Herstellung der progressiven Fläche bzw. der Gießform, der Absenkform oder des Preßstempels mittels eines flächenformenden bzw. flächenbearbeitenden Verfahrens verwendet werden.

**20.** Verfahren nach Anspruch 19,
**dadurch gekennzeichnet, daß** die Daten für die zweite Fläche und die Anordnung der beiden Flächen relativ zueinander für die Herstellung des Brillenglases durch Bearbeitung der zweiten Fläche bzw. die Anordnung der zweiten Gießform relativ zur Gießform für die progressive Fläche verwendet werden.

**Claims**

1. Method for calculating a spectacle lens having

    - an area designed for viewing at long distances and in particular "to infinity", hereinafter referred to as the "distance-viewing part",
    - an area designed for viewing at shorter distances and in particular "reading distances", hereinafter referred as the "near-viewing part", and
    - a progression zone arranged between the distance-viewing part and the near-viewing part, in which zone the effect of the spectacle lens increases, by a value referred to as an "addition", from the value in the distance reference point located in the distance-viewing part to the value of the near reference point located in the near-viewing part along a curve which winds towards the nose, said curve being hereinafter referred to as the "principal line",

    **characterised by** the following steps:

    a. a progression of the projection $x_D(y)$ of the principal line in the x,y plane as well as properties of the spectacle lens along the principal line are preset as initial values, taking into account the spherical, cylindrical and possibly prismatic prescription values and the addition as well as the interpupillary distance, and at least one second-order fringe of the progressive surface of a spectacle lens is calculated using these preset values,
    b. an object distance function $AI(y)$ is preset which describes the change in the object distance during a viewing movement and especially when the gaze is lowered,
    c. in each horizontal section of the progressive spectacle lens, the penetration point of the main ray through the progressive surface is determined, for which the distance of the intersection point of this main ray with a plane which bisects the interpupillary distance, is equal to the object distance given by the object distance function $AI(y)$,
    d. for all these penetration points lying in the principal line of sight, the progression of the projection $x'_0(y)$ in the x,y plane is calculated,
    e. the progression $x'_0(y)$ is set equal to $x_0(y)$ and the correspondence is checked,
    f. then steps a. to e. are iteratively repeated until the projection $x'_0(y)$ of the principal line of sight is equal to the progression of the projection $x_0(y)$ of the principal line used for calculating the corresponding surface,

    a second-order fringe being an area of the progressive surface along the principal line, which is described by the relationship:

$$z\,(x,y) = x_0(y) + z_0(y) + \sum_{i=1}^{n} a_i(y) \cdot \left(x - x_0(y)\right)^i$$

    and in which the progression of the coefficients $a_1(y)$ and $a_2(y)$ is clearly determined by the initial values.

2. Method according to claim 1, **characterised in that** the preset properties of the spectacle lens are surface properties.

3. Method according to claim 2, **characterised in that** the surface properties are the surface astigmatism $A_0(y)$ and the surface focal power $D_0(y)$.

4. Method according to claim 2 or 3, **characterised in that** the sagittal height z and the derivatives $\delta z/\delta x$ and $\delta z/\delta y$ at a specific point of the principal line are preset as initial conditions.

5. Method according to claim 1, **characterised in that** the preset properties of the spectacle lens are properties in the position of use.

6. Method according to claim 5, **characterised in that** the preset properties are the astigmatism and the focal power of the "spectacle lens/eye" combination.

7. Method according to claim 6, **characterised in that** the thickness of the spectacle lens and the prismatic effect at a specific point are preset as initial conditions.

8. Method according to one of claims 1 to 7, **characterised in that** the surface description of the second surface and the refractive index of the spectacle lens are preset as further initial conditions.

9. Method according to claim 8, **characterised in that** the interpupillary distance, the distance of the centre of rotation of the eye as well as the pantoscopic tilt and the lateral tilt of the spectacle lens are additionally preset as initial conditions.

10. Method according to claim 9, **characterised in that** these values as well as the object distance function Al(y) are preset as mean values.

11. Method according to claim 9, **characterised in that** these values as well as the object distance function Al(y) are preset as the individually determined data of the future spectacle-wearer.

12. Method according to claim 11, **characterised in that** the shape of the actual spectacle frame and its arrangement in front of the eyes of the spectacle-wearer are also taken into account.

13. Method according to one of claims 1 to 12, **characterised in that** the projection $x_0(y)$ of the principal line and the preset properties are described by cubic or higher-grade spline functions or an f(y) function of the form

$$f(y) = b + a - \frac{a}{(1 + e^{c(y+d)})^m} + \sum_i g_i y^i$$

14. Method according to one of claims 1 to 13, **characterised in that**, starting from the second-order fringe, for which the principal line coincides with the principal line of sight (at least within the preset limits), the individual horizontal sections ($y = y_c$) which are described by

$$z(x, y_c) = x_0(y_c) + z_0(y_c) + \sum_{i=1}^{n} a_i \cdot (x - x_0(y_c))^i$$

are calculated.

15. Method according to one of claims 1 to 13, **characterised in that**, starting from the second-order fringe in which the principal line coincides with the principal line of sight (at least within the preset limits), the entire surface is calculated using spline functions and usual optimisation methods.

16. Method according to one of claims 1 to 15, **characterised in that** the object distance is the distance from the penetration point of the main ray through the front surface to the intersection point of the main ray with the centre plane which bisects the interpupillary distance.

17. Method according to one of claims 1 to 16, **characterised in that** the progressive surface is the eye-facing surface.

18. Method according to claim 17, **characterised in that** the front surface is a spherical or aspherical surface.

19. Method of manufacturing a spectacle lens, from casting moulds for casting, from drop-plate type moulds or from plugs for moulding spectacle lenses from a plastics material, **characterised in that** the data of a surface calculated according to one of claims 1 to 18 are used for producing the progressive surface or the casting mould, the drop-plate type mould or the moulding plug by means of a surface-moulding or surface-processing method.

20. Method according to claim 19, **characterised in that** the data for the second surface and the arrangement of the two surfaces in relation to one another are used for producing the spectacle lens by processing the second surface or the arrangement of the second casting mould in relation to the casting mould for the progressive surface.

**Revendications**

1. Procédé de calcul d'un verre de lunettes avec

    - une zone conçue pour la vision à de longues distances et en particulier « à l'infini », désignée ci-après partie lointaine,
    - une zone conçue pour la vision à des distances plus courtes et en particulier des « distances de lecture », désignée ci-après partie proche, et
    - une zone de progression disposée entre la partie lointaine et la partie proche, dans laquelle l'effet du verre de lunettes augmente de la valeur du point de référence éloigné situé dans la partie lointaine à la valeur du point de référence proche situé dans la partie proche le long d'une courbe s'étendant vers le nez, désignée ci-après ligne principale, d'une valeur désignée comme une addition,

    **caractérisé par** les étapes suivantes :

    a. un profil de projection $x_0(y)$ de la ligne principale dans le plan x, y est spécifié en tant que valeur de départ, de même que les propriétés du verre de lunettes le long de la ligne principale en tenant compte des valeurs de prescription sphériques, cylindriques et éventuellement prismatiques et de l'addition, ainsi que de la distance des pupilles, et calcule grâce à ces spécifications au moins une bande de second ordre de la surface progressive d'un verre de lunettes,
    b. une fonction d'écartement des objectifs Al(y) est spécifiée, laquelle décrit la modification de la distance des objectifs en cas de mouvement visuel et en particulier en cas d'abaissement visuel,
    c. dans chaque coupe horizontale du verre de lunettes progressif, le point de trace du faisceau principal est déterminé par la surface progressive, pour lequel la distance du point d'intersection de ce faisceau principal avec un plan, qui représente la moitié de la distance des pupilles, est identique à l'écartement des objectifs donné par la fonction d'écartement des objectifs A1(y),
    d. pour la totalité de ces points de trace situés dans la ligne de visée principale, le profil de projection $x'_0(y)$ est calculé dans le plan x, y,
    e. le profil $x'_0(y)$ est placé au même niveau que $x_0(y)$, et la correspondance est vérifiée,
    f. ensuite, les étapes a à e sont répétées itérativement jusqu'à ce que la projection $x'_0(y)$ de la ligne de visée principale soit identique au profil de la projection $x_0(y)$, utilisée pour le calcul de la surface correspondante, de la ligne principale,

    moyennant quoi une bande de second ordre est une zone de la surface progressive le long de la ligne principale, qui est décrite par la relation

$$z(x,y) = x_0(y) + z_0(y) + \sum_{i=1}^{n} a_i(y) \cdot (x - x_0(y))^i$$

    et dans laquelle le profil des coefficients $a_1(y)$ et $a_2(y)$ est déterminé de manière claire par les valeurs de départ.

2. Procédé selon la revendication 1, **caractérisé en ce que** les propriétés spécifiées du verre de lunettes sont des propriétés de surface.

3. Procédé selon la revendication 2, **caractérisé en ce que** les propriétés de surface sont l'astigmatisme de surface $A_0(y)$ et le pouvoir réfringent de surface $D_0(y)$.

4. Procédé selon la revendication 2 ou 3, **caractérisé en ce que** la hauteur de flèche z et les dérivations δz/δx et δz/δy sont spécifiées comme des conditions de départ à un endroit déterminé de la ligne principale.

5. Procédé selon la revendication 1, **caractérisé en ce que** les propriétés spécifiées du verre de lunettes sont des propriétés dans la position d'utilisation.

6. Procédé selon la revendication 5,

**caractérisé en ce que** les propriétés spécifiées sont l'astigmatisme et le pouvoir réfringent de la combinaison « verre de lunettes/oeil ».

7. Procédé selon la revendication 6,
**caractérisé en ce que** l'épaisseur du verre de lunettes et l'effet prismatique sont spécifiés comme des conditions de départ à un endroit défini.

8. Procédé selon une des revendications 1 à 7,
**caractérisé en ce que** la description de surface de la seconde surface et l'indice de réfraction du verre de lunettes sont spécifiés comme d'autres conditions de départ.

9. Procédé selon la revendication 8,
**caractérisé en ce que** la distance des pupilles, l'écartement du point d'appui des yeux et l'inclinaison avant et l'inclinaison latérale du verre de lunettes sont spécifiés en plus comme des conditions de départ.

10. Procédé selon la revendication 9,
**caractérisé en ce que** ces grandeurs, ainsi que la fonction d'écartement des objectifs A1(y), sont spécifiées comme des valeurs moyennes.

11. Procédé selon la revendication 9,
**caractérisé en ce que** ces grandeurs, ainsi que la fonction d'écartement des objectifs A1(y), sont spécifiées comme les données établies individuellement du futur porteur de lunettes.

12. Procédé selon la revendication 11,
**caractérisé en ce que** la forme de la monture de lunettes effective et sa disposition devant les yeux du porteur de lunettes sont en plus prises en compte.

13. Procédé selon une des revendications 1 à 12,
**caractérisé en ce que** la projection $x_0(y)$ de la ligne principale, ainsi que les propriétés spécifiées, sont décrites par les fonctions spline cubiques ou de niveau supérieur ou une fonction f(y) de la forme

$$f(y) = b + a - \frac{a}{(1 + e^{c(y+d)})^m} + \sum_i g_i y^i$$

14. Procédé selon une des revendications 1 à 13,
**caractérisé en ce que**, à partir des bandes de second ordre, pour lesquelles la ligne principale coïncide avec la ligne de vision principale (au moins dans les limites spécifiées), sont calculées les différentes coupes horizontales $(y = y_c)$ qui sont décrites par

$$z(x_0 y_c) = x_0(y_c) + z_0(y_c) + \sum_{i=1}^{n} a_i (x - x_0(y_c))^i$$

15. Procédé selon une des revendications 1 à 13,
**caractérisé en ce que**, à partir de la bande de second ordre, dans laquelle la ligne principale coïncide avec la ligne de vision principale (au moins dans les limites spécifiées), toute la surface est calculée au moyen de fonctions spline et de procédés d'optimisation courants.

16. Procédé selon une des revendications 1 à 15,
**caractérisé en ce que** l'écartement des objectifs est la distance entre le point de trace du faisceau principal à travers la surface avant et le point d'intersection du faisceau principal avec le plan central qui divise par deux la distance des pupilles.

17. Procédé selon une des revendications 1 à 16,

**caractérisé en ce que** la surface progressive est la surface côté oeil.

18. Procédé selon la revendication 17,
**caractérisé en ce que** la surface avant est une surface sphérique ou asphérique.

19. Procédé de fabrication d'un verre de lunettes par des moules pour le moulage, par des moules à descente ou le poinçonnage pour l'ébauche, des verres de lunettes dans un matériau plastique,
**caractérisé en ce que** les données d'une surface calculée selon une des revendications 1 à 18 sont utilisées pour la fabrication de la surface progressive et/ou du moule,
du moule à descente ou du poinçon-ébaucheur au moyen d'un procédé de façonnage de surface et/ou d'usinage de surface.

20. Procédé selon la revendication 19,
**caractérisé en ce que** les données pour la seconde surface et la disposition des deux surfaces entre elles sont utilisées pour la fabrication du verre de lunettes par l'usinage de la seconde surface et/ou la disposition du second moule par rapport au moule pour la surface progressive.

Fig. 1a

Brechwert (S'-S)

Fig. 16

Flaechenastigmatismus

hep5add100_ref4.HEP

Fig. 1c

Fig. 1α

Fig.2a

Brechwert (S'-S)

| 3.00 | 3.25 | 3.50 | 3.75 | 4.00 | 4.25 | 4.50 | 4.75 | 5.00 | 5.25 | 5.50 |
|------|------|------|------|------|------|------|------|------|------|------|
| 5.75 | 6.00 | 6.25 | 6.50 | 6.75 | 7.00 | 7.01 | | | | |

Fig.26

Flaechenastigmatismus

hep5add200_ref4.HEP

Fig. 2c

Mittl. Flaechenbrechwert

Fig. 2d

Fig. 3a

Brechwert (S'-S)

Fig. 3b

Flaechenastigmatismus

Fig.3c

Fig. 3d

Fig. 4a

Brechwert (S'-S)

Fig. 46

Fig. 4c

Mittl. Flaechenbrechwert

hep-1add100_ref4.HEP

Fig. 4d

Fig. 5a

Fig. 56

Flaechenastigmatismus

Fig. 5c

Mittl. Flaechenbrechwert

hep-1add200_ref4.HEP

| -6.00 | -5.75 | -5.50 | -5.25 | -5.00 | -4.75 | -4.50 | -4.25 | -4.00 | -3.75 | -3.50 |
| -3.25 | -3.00 | -2.75 | -2.50 | -2.25 | -2.00 | -1.75 | -1.50 | -1.25 | -1.00 | -0.75 | -0.50 |
| -0.25 | 0.00 |

*Fig. 5d*

Astigmatismus (Kom. Glas+Auge)

hep-1add300_ref4.HEP

Fig. 6a

Brechwert (S'-S)

hep-1add300_ref4.HEP

*Fig. 66*

Flaechenastigmatismus

hep-1add300_ref4.HEP

Fig. 6c

Mittl. Flaechenbrechwert

hep-1add300_ref4.HEP

| -5.00 | -4.75 | -4.50 | -4.25 | -4.00 | -3.75 | -3.50 | -3.25 | -3.00 | -2.75 | -2.50 |
|-------|-------|-------|-------|-------|-------|-------|-------|-------|-------|-------|
| -2.25 | -2.00 | -1.75 | -1.50 | -1.25 | -1.00 | -0.75 | -0.50 | -0.25 | 0.00 | 0.00 |

Fig. 6d

Pfeilhöhen:

| 0 | -20 | -17,5 | -15 | -12,5 | -10 | -7,5 | -5 | -2,5 | 0 |
|---|---|---|---|---|---|---|---|---|---|
| 20 | 0 | 0 | 0 | 0 | 0 | 0 | 0 | 0 | 1,88114 |
| 17,5 | 0 | 0 | 0 | 0 | 0 | 1,727544 | 1,572749 | 1,476457 | 1,43867 |
| 15 | 0 | 0 | 0 | 1,826893 | 1,556258 | 1,343761 | 1,189465 | 1,093506 | 1,055966 |
| 12,5 | 0 | 0 | 1,827844 | 1,500623 | 1,231244 | 1,019591 | 0,865786 | 0,770078 | 0,732707 |
| 10 | 0 | 0 | 1,558189 | 1,232921 | 0,965089 | 0,754524 | 0,601373 | 0,505935 | 0,468649 |
| 7,5 | 0 | 1,726383 | 1,345574 | 1,022576 | 0,756795 | 0,547868 | 0,39579 | 0,300844 | 0,263672 |
| 5 | 0 | 1,566588 | 1,188478 | 0,868198 | 0,605063 | 0,398525 | 0,248337 | 0,154463 | 0,117588 |
| 2,5 | 0 | 1,459495 | 1,084527 | 0,767617 | 0,508048 | 0,305076 | 0,15802 | 0,066273 | 0,030092 |
| 0 | 1,833183 | 1,402774 | 1,031483 | 0,718726 | 0,463772 | 0,26566 | 0,123183 | 0,035027 | 0,00048 |
| -2,5 | 0 | 1,394456 | 1,027487 | 0,719736 | 0,470458 | 0,278427 | 0,141793 | 0,058484 | 0,026833 |
| -5 | 0 | 1,432945 | 1,070942 | 0,768862 | 0,525984 | 0,340808 | 0,210844 | 0,133162 | 0,105213 |
| -7,5 | 0 | 1,51707 | 1,160674 | 0,864715 | 0,628528 | 0,450405 | 0,32724 | 0,255205 | 0,230946 |
| -10 | 0 | 0 | 1,296365 | 1,00678 | 0,777293 | 0,605921 | 0,488983 | 0,42183 | 0,400599 |
| -12,5 | 0 | 0 | 1,479087 | 1,195879 | 0,972726 | 0,807223 | 0,695213 | 0,631598 | 0,61234 |
| -15 | 0 | 0 | 0 | 1,43296 | 1,214957 | 1,053701 | 0,944992 | 0,883608 | 0,86536 |
| -17,5 | 0 | 0 | 0 | 0 | 0 | 1,344445 | 1,237531 | 1,177299 | 1,159499 |
| -20 | 0 | 0 | 0 | 0 | 0 | 0 | 0 | 0 | 1,494969 |

| 0 | 2,5 | 5 | 7,5 | 10 | 12,5 | 15 | 17,5 | 20 |
|---|---|---|---|---|---|---|---|---|
| 20 | 0 | 0 | 0 | 0 | 0 | 0 | 0 | 0 |
| 17,5 | 1,459338 | 1,538288 | 1,675159 | 0 | 0 | 0 | 0 | 0 |
| 15 | 1,076827 | 1,155872 | 1,292618 | 1,4865 | 1,737064 | 0 | 0 | 0 |
| 12,5 | 0,753727 | 0,832805 | 0,969293 | 1,162491 | 1,41186 | 1,717203 | 0 | 0 |
| 10 | 0,489795 | 0,568789 | 0,704732 | 0,896843 | 1,144544 | 1,447722 | 0 | 0 |
| 7,5 | 0,28482 | 0,36345 | 0,498312 | 0,688619 | 0,933952 | 1,234434 | 1,590531 | 0 |
| 5 | 0,138583 | 0,216248 | 0,349126 | 0,536661 | 0,778744 | 1,075794 | 1,428451 | 0 |
| 2,5 | 0,050725 | 0,126539 | 0,256119 | 0,439446 | 0,677017 | 0,969632 | 1,318088 | 0 |
| 0 | 0,020498 | 0,093392 | 0,218221 | 0,395724 | 0,62728 | 0,914254 | 1,257604 | 1,658066 |
| -2,5 | 0,046199 | 0,115437 | 0,23443 | 0,404667 | 0,628679 | 0,908687 | 1,245883 | 0 |
| -5 | 0,124484 | 0,189993 | 0,302891 | 0,46531 | 0,680802 | 0,952663 | 1,282563 | 0 |
| -7,5 | 0,250899 | 0,313413 | 0,420938 | 0,576172 | 0,783244 | 1,046462 | 1,368183 | 0 |
| -10 | 0,421421 | 0,482323 | 0,585923 | 0,735457 | 0,935213 | 1,190203 | 0 | 0 |
| -12,5 | 0,633866 | 0,694298 | 0,795689 | 0,941459 | 1,135746 | 1,383841 | 0 | 0 |
| -15 | 0,887307 | 0,947892 | 1,048564 | 1,192212 | 1,38304 | 0 | 0 | 0 |
| -17,5 | 1,181572 | 1,242623 | 1,343387 | 0 | 0 | 0 | 0 | 0 |
| -20 | 0 | 0 | 0 | 0 | 0 | 0 | 0 | 0 |

**Fig. 7a**

Fig. 76

Brechwert (S'−S)

Fig. 7c

Flaechenastigmatismus

Fig. 7d

Mittl. Flaechenbrechwert

Fig. 7e

Pfeilhöhen:

| 0 | -20 | -17,5 | -15 | -12,5 | -10 | -7,5 | -5 | -2,5 | 0 |
|---|---|---|---|---|---|---|---|---|---|
| 20 | 0 | 0 | 0 | 0 | 0 | 0 | 0 | 0 | 1,863159 |
| 17,5 | 0 | 0 | 0 | 0 | 0 | 1,713431 | 1,559597 | 1,463879 | 1,426279 |
| 15 | 0 | 0 | 0 | 1,814691 | 1,545607 | 1,334283 | 1,180808 | 1,085335 | 1,047946 |
| 12,5 | 0 | 0 | 1,817928 | 1,492398 | 1,224321 | 1,013636 | 0,860507 | 0,765194 | 0,727941 |
| 10 | 0 | 0 | 1,551597 | 1,22773 | 0,960937 | 0,751121 | 0,598481 | 0,503342 | 0,466141 |
| 7,5 | 0 | 1,720774 | 1,34152 | 1,019638 | 0,754625 | 0,546206 | 0,394455 | 0,2997 | 0,262583 |
| 5 | 0 | 1,563111 | 1,186309 | 0,866886 | 0,604259 | 0,397983 | 0,247914 | 0,154101 | 0,117244 |
| 2,5 | 0 | 1,457542 | 1,083694 | 0,76743 | 0,50814 | 0,305203 | 0,158065 | 0,066241 | 0,030034 |
| 0 | 1,830565 | 1,40174 | 1,031453 | 0,719197 | 0,464364 | 0,266129 | 0,123429 | 0,035094 | 0,000481 |
| -2,5 | 0 | 1,393647 | 1,027636 | 0,720335 | 0,471125 | 0,278936 | 0,142058 | 0,058561 | 0,026865 |
| -5 | 0 | 1,431506 | 1,070482 | 0,768893 | 0,526155 | 0,340932 | 0,210884 | 0,133127 | 0,105253 |
| -7,5 | 0 | 1,513988 | 1,158641 | 0,863288 | 0,627413 | 0,449478 | 0,326492 | 0,254673 | 0,230694 |
| -10 | 0 | 0 | 1,291739 | 1,002913 | 0,773978 | 0,603099 | 0,486693 | 0,420087 | 0,399381 |
| -12,5 | 0 | 0 | 1,470987 | 1,18868 | 0,96633 | 0,801624 | 0,690475 | 0,6277 | 0,609175 |
| -15 | 0 | 0 | 0 | 1,421637 | 1,204619 | 1,044387 | 0,936771 | 0,876431 | 0,859052 |
| -17,5 | 0 | 0 | 0 | 0 | 0 | 1,330393 | 1,224673 | 1,165587 | 1,148724 |
| -20 | 0 | 0 | 0 | 0 | 0 | 0 | 0 | 0 | 1,478348 |

| 0 | 2,5 | 5 | 7,5 | 10 | 12,5 | 15 | 17,5 | 20 |
|---|---|---|---|---|---|---|---|---|
| 20 | 0 | 0 | 0 | 0 | 0 | 0 | 0 | 0 |
| 17,5 | 1,446742 | 1,525089 | 1,660949 | 0 | 0 | 0 | 0 | 0 |
| 15 | 1,068624 | 1,14714 | 1,283004 | 1,475621 | 1,724487 | 0 | 0 | 0 |
| 12,5 | 0,748801 | 0,827434 | 0,96318 | 1,155306 | 1,403207 | 1,706598 | 0 | 0 |
| 10 | 0,487156 | 0,565798 | 0,701157 | 0,892405 | 1,138875 | 1,440352 | 0 | 0 |
| 7,5 | 0,283629 | 0,362012 | 0,496472 | 0,686141 | 0,930483 | 1,229496 | 1,583527 | 0 |
| 5 | 0,138174 | 0,215724 | 0,348404 | 0,535528 | 0,776835 | 1,072602 | 1,423349 | 0 |
| 2,5 | 0,050649 | 0,126498 | 0,256084 | 0,439204 | 0,676165 | 0,967619 | 1,314241 | 0 |
| 0 | 0,020553 | 0,09362 | 0,218612 | 0,396033 | 0,627053 | 0,912895 | 1,254395 | 1,652185 |
| -2,5 | 0,046367 | 0,115871 | 0,235083 | 0,405233 | 0,628653 | 0,907447 | 1,242688 | 0 |
| -5 | 0,124772 | 0,190572 | 0,303627 | 0,465825 | 0,680542 | 0,950999 | 1,278758 | 0 |
| -7,5 | 0,251041 | 0,313835 | 0,421376 | 0,576191 | 0,782252 | 1,043815 | 1,363169 | 0 |
| -10 | 0,420719 | 0,481895 | 0,585365 | 0,734297 | 0,932838 | 1,185937 | 0 | 0 |
| -12,5 | 0,631287 | 0,691979 | 0,793141 | 0,938177 | 1,13112 | 1,377177 | 0 | 0 |
| -15 | 0,881609 | 0,942421 | 1,04282 | 1,185658 | 1,375067 | 0 | 0 | 0 |
| -17,5 | 1,171396 | 1,232634 | 1,333105 | 0 | 0 | 0 | 0 | 0 |
| -20 | 0 | 0 | 0 | 0 | 0 | 0 | 0 | 0 |

Fig. 8a

Astigmatismus (Kom. Glas+Auge)

Fig. 86

Fig. 8c

Fig. 8d

Mittl. Flaechenbrechwert

Fig. 8e

Pfeilhöhen:

| 0 | -20 | -17,5 | -15 | -12,5 | -10 | -7,5 | -5 | -2,5 | 0 |
|---|---|---|---|---|---|---|---|---|---|
| 20 | 0 | 0 | 0 | 0 | 0 | 0 | 0 | 0 | 1,463192 |
| 17,5 | 0 | 0 | 0 | 0 | 0 | 1,351751 | 1,230516 | 1,154267 | 1,123188 |
| 15 | 0 | 0 | 0 | 1,432649 | 1,222377 | 1,056285 | 0,934816 | 0,858412 | 0,827363 |
| 12,5 | 0 | 0 | 1,435241 | 1,181539 | 0,971452 | 0,80533 | 0,683694 | 0,607109 | 0,576043 |
| 10 | 0 | 0 | 1,227201 | 0,974334 | 0,764837 | 0,599018 | 0,477446 | 0,400755 | 0,369616 |
| 7,5 | 0 | 1,35686 | 1,061981 | 0,810421 | 0,602142 | 0,437275 | 0,316257 | 0,239735 | 0,208596 |
| 5 | 0 | 1,231614 | 0,938551 | 0,688921 | 0,48261 | 0,319572 | 0,200009 | 0,124279 | 0,093338 |
| 2,5 | 0 | 1,145583 | 0,854972 | 0,608102 | 0,404841 | 0,24496 | 0,12822 | 0,054403 | 0,024064 |
| 0 | 1,428494 | 1,096785 | 0,809336 | 0,566173 | 0,367188 | 0,211947 | 0,099648 | 0,029303 | 0,000479 |
| -2,5 | 0 | 1,083532 | 0,800033 | 0,561595 | 0,368122 | 0,218933 | 0,112509 | 0,047001 | 0,020916 |
| -5 | 0 | 1,10447 | 0,825692 | 0,592805 | 0,405729 | 0,263502 | 0,163875 | 0,104027 | 0,081486 |
| -7,5 | 0 | 1,158712 | 0,885421 | 0,658653 | 0,478363 | 0,343326 | 0,25058 | 0,196349 | 0,177314 |
| -10 | 0 | 0 | 0,979146 | 0,758828 | 0,585318 | 0,457079 | 0,37049 | 0,320968 | 0,304702 |
| -12,5 | 0 | 0 | 1,108029 | 0,894145 | 0,726942 | 0,604462 | 0,522565 | 0,476302 | 0,46173 |
| -15 | 0 | 0 | 0 | 1,065304 | 0,90314 | 0,784706 | 0,705826 | 0,661476 | 0,647667 |
| -17,5 | 0 | 0 | 0 | 0 | 0,996895 | 0,919563 | 0,876091 | 0,862511 |
| -20 | 0 | 0 | 0 | 0 | 0 | 0 | 0 | 0 | 1,106712 |

| 0 | 2,5 | 5 | 7,5 | 10 | 12,5 | 15 | 17,5 | 20 |
|---|---|---|---|---|---|---|---|---|
| 20 | 0 | 0 | 0 | 0 | 0 | 0 | 0 | 0 |
| 17,5 | 1,137299 | 1,196414 | 1,300091 | 0 | 0 | 0 | 0 | 0 |
| 15 | 0,841728 | 0,901269 | 1,005406 | 1,153389 | 1,344503 | 0 | 0 | 0 |
| 12,5 | 0,590642 | 0,650549 | 0,754992 | 0,903076 | 1,09398 | 1,327145 | 0 | 0 |
| 10 | 0,384431 | 0,444568 | 0,549005 | 0,696743 | 0,886902 | 1,118987 | 0 | 0 |
| 7,5 | 0,223489 | 0,283546 | 0,3874 | 0,534022 | 0,722666 | 0,953043 | 1,22513 | 0 |
| 5 | 0,108139 | 0,167477 | 0,269782 | 0,414245 | 0,600403 | 0,828231 | 1,097849 | 0 |
| 2,5 | 0,038523 | 0,096156 | 0,195487 | 0,336256 | 0,518581 | 0,742766 | 1,009047 | 0 |
| 0 | 0,014248 | 0,068934 | 0,163658 | 0,298981 | 0,475882 | 0,69515 | 0,95711 | 1,261866 |
| -2,5 | 0,033792 | 0,084599 | 0,173402 | 0,301649 | 0,471495 | 0,684467 | 0,941018 | 0 |
| -5 | 0,093825 | 0,140525 | 0,222954 | 0,343364 | 0,505026 | 0,710451 | 0,960427 | 0 |
| -7,5 | 0,189843 | 0,233084 | 0,309789 | 0,42283 | 0,57621 | 0,773454 | 1,015905 | 0 |
| -10 | 0,317756 | 0,358953 | 0,431424 | 0,538505 | 0,684523 | 0,873797 | 0 | 0 |
| -12,5 | 0,475298 | 0,515786 | 0,585814 | 0,688904 | 0,829288 | 1,011708 | 0 | 0 |
| -15 | 0,661588 | 0,702177 | 0,771337 | 0,872168 | 1,008931 | 0 | 0 | 0 |
| -17,5 | 0,876573 | 0,917681 | 0,986887 | 0 | 0 | 0 | 0 | 0 |
| -20 | 0 | 0 | 0 | 0 | 0 | 0 | 0 | 0 |

Fig. 9a

Astigmatismus (Kom. Glas+Auge)

Fig. 96

Fig. 9c

Fig. 9d

Fig. 9e

Pfeilhöhen:

| 0 | -20 | -17,5 | -15 | -12,5 | -10 | -7,5 | -5 | -2,5 | 0 |
|---|---|---|---|---|---|---|---|---|---|
| 20 | 0 | 0 | 0 | 0 | 0 | 0 | 0 | 0 | 1,659511 |
| 17,5 | 0 | 0 | 0 | 0 | 0 | 1,50138 | 1,379958 | 1,303651 | 1,272636 |
| 15 | 0 | 0 | 0 | 1,542449 | 1,331838 | 1,165525 | 1,043953 | 0,967554 | 0,936603 |
| 12,5 | 0 | 0 | 1,511323 | 1,257288 | 1,046964 | 0,880706 | 0,759034 | 0,682506 | 0,651567 |
| 10 | 0 | 0 | 1,275555 | 1,022451 | 0,812796 | 0,646908 | 0,525351 | 0,448755 | 0,417772 |
| 7,5 | 0 | 1,384017 | 1,088928 | 0,837204 | 0,628823 | 0,463931 | 0,342966 | 0,266564 | 0,235592 |
| 5 | 0 | 1,243534 | 0,950325 | 0,700575 | 0,49419 | 0,331146 | 0;211657 | 0,13607 | 0,105312 |
| 2,5 | 0 | 1,148451 | 0,857733 | 0,610758 | 0,407419 | 0,24752 | 0,130852 | 0,057195 | 0,027055 |
| 0 | 1,428472 | 1,096717 | 0,809173 | 0,565888 | 0,366782 | 0,211471 | 0,099215 | 0,029052 | 0,000481 |
| -2,5 | 0 | 1,086557 | 0,802936 | 0,564317 | 0,370641 | 0,221298 | 0,11488 | 0,049592 | 0,023896 |
| -5 | 0 | 1,116483 | 0,837507 | 0,604327 | 0,416932 | 0,274467 | 0,174837 | 0,115297 | 0,093357 |
| -7,5 | 0 | 1,185454 | 0,911829 | 0,684631 | 0,503912 | 0,368602 | 0,275938 | 0,222187 | 0,203995 |
| -10 | 0 | 0 | 1,025783 | 0,804908 | 0,63094 | 0,502494 | 0,416174 | 0,367378 | 0,352221 |
| -12,5 | 0 | 0 | 1,180632 | 0,966146 | 0,798566 | 0,676059 | 0,594688 | 0,549413 | 0,53619 |
| -15 | 0 | 0 | 0 | 1,169289 | 1,006916 | 0,888686 | 0,810566 | 0,767439 | 0,75515 |
| -17,5 | 0 | 0 | 0 | 0 | 0 | 1,139476 | 1,063086 | 1,021001 | 1,009067 |
| -20 | 0 | 0 | 0 | 0 | 0 | 0 | 0 | 0 | 1,298354 |

| 0 | 2,5 | 5 | 7,5 | 10 | 12,5 | 15 | 17,5 | 20 |
|---|---|---|---|---|---|---|---|---|
| 20 | 0 | 0 | 0 | 0 | 0 | 0 | 0 | 0 |
| 17,5 | 1,286926 | 1,346322 | 1,450361 | 0 | 0 | 0 | 0 | 0 |
| 15 | 0,951153 | 1,010952 | 1,115402 | 1,263729 | 1,455195 | 0 | 0 | 0 |
| 12,5 | 0,666353 | 0,726494 | 0,831205 | 0,979561 | 1,170717 | 1,404099 | 0 | 0 |
| 10 | 0,432768 | 0,49312 | 0,597781 | 0,745722 | 0,93604 | 1,168227 | 0 | 0 |
| 7,5 | 0,250671 | 0,310929 | 0,414968 | 0,561729 | 0,750443 | 0,980815 | 1,252824 | 0 |
| 5 | 0,120303 | 0,17983 | 0,282288 | 0,42683 | 0,612975 | 0,840698 | 1,110129 | 0 |
| 2,5 | 0,041724 | 0,099567 | 0,199042 | 0,33984 | 0,522071 | 0,746055 | 1,012047 | 0 |
| 0 | 0,014532 | 0,069517 | 0,164418 | 0,299733 | 0,476453 | 0,695415 | 0,956982 | 1,261273 |
| -2,5 | 0,037234 | 0,088517 | 0,177598 | 0,305833 | 0,475407 | 0,687952 | 0,94399 | 0 |
| -5 | 0,106518 | 0,153939 | 0,236827 | 0,357304 | 0,518642 | 0,723519 | 0,972842 | 0 |
| -7,5 | 0,217754 | 0,262028 | 0,339427 | 0,452722 | 0,605842 | 0,802481 | 1,044176 | 0 |
| -10 | 0,366784 | 0,409332 | 0,482737 | 0,590319 | 0,736259 | 0,924994 | 0 | 0 |
| -12,5 | 0,551412 | 0,593445 | 0,664619 | 0,768447 | 0,908996 | 1,091047 | 0 | 0 |
| -15 | 0,770786 | 0,813003 | 0,883481 | 0,985229 | 1,122374 | 0 | 0 | 0 |
| -17,5 | 1,024861 | 1,067625 | 1,138261 | 0 | 0 | 0 | 0 | 0 |
| -20 | 0 | 0 | 0 | 0 | 0 | 0 | 0 | 0 |

Fig. 10a

Fig. 106

Brechwert (S'-S)

Fig. 10c

Fig. 10 d

Mittl. Flaechenbrechwert

Fig. 10e